# EUROPÄISCHE PATENTSCHRIFT

(11) **EP 1 268 257 B1**
(45) Veröffentlichungstag und Bekanntmachung des Hinweises auf die Patenterteilung: **26.07.2006**
(21) Anmeldenummer: 01936134.4
(22) Anmeldetag: 23.03.2001
(51) Int. Cl.: B62D 5/04, B62D 6/00, B62D 101/00, B62D 113/00, B62D 119/00, B62D 121/00

(54) **FAHRZEUGLENKUNG UND ACHSLENKMODUL FÜR EINE FAHRZEUGLENKUNG**
VEHICLE STEERING SYSTEM AND AXLE GUIDE MODULE FOR A VEHICLE STEERING SYSTEM
DIRECTION DE VEHICULE ET MODULE DE DIRECTION POUR DIRECTION DE VEHICULE

(30) Priorität: 27.03.2000 DE 10015233; 20.10.2000 DE 10051968; 20.10.2000 DE 10051969
(43) Veröffentlichungstag der Anmeldung: 02.01.2003
(73) Patentinhaber: Continental Teves AG & Co. oHG, 60488 Frankfurt (DE)
(72) Erfinder: RIETH, Peter, 65343 Eltville (DE); ECKERT, Alfred, 55129 Mainz-Hechtsheim (DE); DRUMM, Stefan, A., 55291 Saulheim (DE); BÖHM, Jürgen, 65558 Oberneisen (DE); JUNGBECKER, Johann, 55576 Badenheim (DE); SCHWARZ, Ralf, 69118 Heidelberg (DE); HOFFMANN, Oliver, 60486 Frankfurt (DE); NELL, Joachim, 63452 Hanau (DE); LINKENBACH, Steffen, 65760 Eschborn (DE)
(86) Internationale Anmeldenummer: PCT/EP2001/003354
(87) Internationale Veröffentlichungsnummer: WO 2001/072571

(56) Entgegenhaltungen:
- EP-A- 0 667 279
- EP-A- 0 829 416
- DE-C- 19 539 101
- DE-U- 29 915 559
- US-A- 4 741 409

## Beschreibung

Die Erfindung betrifft eine Fahrzeuglenkung und ein Achslenkmodul für eine Fahrzeuglenkung.

Heutige Fahrzeuge, insbesondere Personenkraftwagen, sind in der Regel mit hydraulischen Servolenkungen ausgestattet, bei denen ein Lenkhandrad mechanisch mit den lenkbaren Fahrzeugrädern zwangsgekoppelt ist.

Es ist bekannt, die lenkbaren Fahrzeugräder antriebsmäßig mit einem Servomotor zu koppeln, welcher in Abhängigkeit von den zwischen Lenkhandrad und gelenkten Fahrzeugrädern übertragenen Kräften bzw. Momenten gesteuert wird, um die für das jeweilige Lenkmanöver an der Lenkbetätigungseinrichtung notwendige Handkraft zu vermindern.

Ferner sind Fahrzeuglenkungen bekannt, bei denen die Lenkbetätigungseinrichtung und die gelenkten Fahrzeugräder nur über eine Regelstrecke gekoppelt sind und wobei eine mechanische Verbindung zwischen dem Lenkhandrad und den Fahrzeugrädern nicht mehr vorliegt.

Oftmals aber wird auf einen mechanischen Durchtrieb zwischen Lenkradhandhabe und gelenkten Fahrzeugrädern nicht völlig verzichtet. Dann ist es vorgesehen, den mechanischen Durchtrieb bei fehlerfrei arbeitender Regelstrecke aufzutrennen und damit unwirksam zu machen. Wenn jedoch in der Regelstrecke, die sich ständig selbst auf Fehler überwacht, eine Fehlfunktion festgestellt werden sollte, wird der mechanische Durchtrieb automatisch wirksam geschaltet. Der mechanische Durchtrieb bildet so eine "mechanische Notfallebene" bei eventuellen Fehlfunktionen der Regelstrecke.

In der US-A-4 741 409 (D1) ist eine Lenkung mit den Merkmalen des Oberbegriffs des Anspruchs 1 beschrieben, bei der eine Redundanz der Lenkfunktion allein durch eine mechanische Verbindungsmöglichkeit der zwei (unabhängigen) Stellaggregate sichergestellt werden soll.

Aus der DE-U-299 15 559 (D2) ist bekannt, dass die Redundanz der Lenkfunktion durch zwei (unabhängige) Stelleinheiten erreicht werden soll. Die Ansteuerung erfolgt dabei durch eine Steuereinheit. Eine große Ausfallsicherheit soll hier durch eine getrennte Kapselung der (einzigen) elektronischen Baueinheit erreicht werden. Im Grunde soll also die (einzige) elektronische Baueinheit durch spezielle Maßnahmen weniger störanfällig ausgebildet werden.

Aufgabe der Erfindung ist es nun, eine vorteilhafte Ausgestaltung für eine Fahrzeuglenkung und eine lenkbare Fahrzeugachse aufzuzeigen, die keine mechanische Verbindung zwischen dem Lenkhandrad und den Fahrzeugrädern aufweist, aber eine sichere und zuverlässige Lenkfunktion gewährleistet.

Diese Aufgabe wird durch die Merkmale des Patentanspruchs 1 gelöst. Besonders vorteilhafte Ausgestaltungen der erfindungsgemäßen Lenkung sind in den abhängigen Ansprüchen 1 bis 33 angegeben.

Da bei dieser Fahrzeuglenkung keine direkte mechanische Verbindung zwischen der Lenkbetätigungseinrichtung und den elektromechanischen Stellaggregaten besteht, geht dem Fahrer die ihm darüber herkömmlicherweise vermittelte Rückmeldung bezüglich des jeweiligen Lenkungszustands verloren. Daher ist es der mindestens eine Betätigungskraftsimulator vorgesehen , der auch Lenkbetätigungseinrichtung selbst aktiv auslenkbar auszugestalten. So kann einerseits die auf Lenkbetätigungseinrichtung ausgeübte Betätigungskraft die Lenkwinkel-Sollwertvorgabe beeinflussen und darüber kann eine intuitive Rückmeldung einer oder mehrerer fahrdynamischer Größen erfolgen.

Unter dem Begriff "eine redundante Rechnereinheit" ist hier eine Rechnereinheit mit einer redundanten Architektur, somit mit zwei Rechnern, zu verstehen. Der Begriff "fail-silent" bedeutet hier, dass bei einem Fehler die Zentralsteuereinheit sich ruhig verhält und keine Steuerfunktionen auf andere Systembauteile ausübt. Dabei werden Fehlfunktion festgestellt durch ein selbstständiges Überprüfen der Zentralsteuereinheit, insbesondere durch eine Fehlererkennungsschaltung, zum Beispiel einen Vergleicher, der die aus den beiden Rechnern der redundanten Rechnereinheit ausgegebenen Werte oder Signale vergleicht. Im Falle einer Fehlfunktion eines Rechners, die zu bestimmten Abweichungen der beiden Werte oder Signale führt, schaltet dann die Zentralsteuereinheit selbstständig ab (fail-silent).

Die Zentralsteuereinheit steuert die Stellaggregate in Abhängigkeit von zumindest einem Soll-Istwert-Vergleich und gegebenenfalls weiterer Größen. Dazu steuert die Zentralsteuereinheit die Stellaggregate derart, dass ein Stellaggregat zur Lenkverstellung der Fahrzeugräder einen Stellhub ausführt, bei dem der vom Istwertgeber erfasste Istwert des Lenkwinkels auf den vom Sollwertgeber vorgegebenen Lenkwinkel-Sollwert eingeregelt wird, der durch eine Betätigung der Lenkbetätigungseinrichtung vorgegeben wird. Gegebenenfalls kann dieser Sollwert durch weitere Größen modifiziert werden, um zum Beispiel auf das Fahrzeug einwirkende Störkräfte zumindest teilweise auszuregeln. Weitere Größen sind vorteilhaft die Geschwindigkeit des Fahrzeugs, die Fahrstabilität, insbesondere das Giermoment oder der Schwimmwinkel des Fahrzeugs, der Fahrbahnzustand und/oder andere Einflüsse, wie beispielsweise Seitenwind. Es ist vorgesehen auch eine Dämpfungsfunktion zur Kompensation einer zu heftigen Fahrerbetätigung der Lenkbetätigungseinrichtung durch eine entsprechende Steuerfunktion zu integrieren.

Vorzugsweise aber wird der Lenkwinkel-Sollwert für das Stellaggregat zumindest abhängig von der auf die Lenkbetätigungseinrichtung ausgeübten Betätigungskraft und von der momentanen Fahrzeuglängsgeschwindigkeit variabel vorgegeben, um eine geschwindigkeitsabhängige Lenkübersetzung und Lenkunterstützung zu erzielen. Dazu wird die Zentralsteuereinheit eingangsseitig mit Sensoren verbunden, deren Signale mit den an den lenkbaren Fahrzeugrädern auftretenden Lenkkräften korreliert sind. Beispielsweise können die Sensoren die Kräfte in den Stellaggregaten erfassen. Des weiteren kann die Zentralsteuereinheit eingangsseitig noch mit Sensoren verbunden sein, durch die vorzugebende Parameter erfasst werden, z. B. die Querbeschleunigung, und/oder die Giergeschwindigkeit des Fahrzeuges.

Unter dem Begriff "eine redundante elektronische Baueinheit" ist hier eine Baueinheit mit einer redundanten Architektur, mit vorzugsweise zwei Rechnern, zu verstehen. Der Begriff "fail-silent" bedeutet hier, dass sich die elektronische Baueinheit im Fehlerfall ruhig verhält und keine Steuerfunktionen auf andere Systembauteile ausübt. Durch selbstständiges Überprüfen der elektronischen Baueinheit werden Fehlfunktion festgestellt, wobei mittels einer Fehlererkennungsschaltung, beispielsweise einen Vergleicher, eventuelle Abweichungen zwischen den aus den beiden Rechnern der redundanten Rechnereinheit ausgegebenen Werten oder Signalen festgestellt werden, die dann zu einem selbstständigen Abschalten der elektronische Baueinheit führen (fail-silent).

Insgesamt weist die erfindungsgemäße Fahrzeuglenkung somit vorzugsweise zumindest vier, den Stellaggregaten zugeordnete Rechner und zwei, der Zentralsteuereinheit zugeordnete Rechner auf.

Gemäß einer bevorzugten Ausführungsform der Erfindung ist es vorgesehen, dass jedes elektromechanische Stellaggregat jeweils von einer unabhängigen Energieversorgungsquelle versorgt wird. Vorzugsweise sind die unabhängigen Energieversorgungsquellen zwei unabhängige Fahrzeugbatterien, die vorzugsweise eine gegenüber eines konventionellen Bordnetzes höhere elektrische Spannung, insbesondere ca. 36 bis 42 V, aufweisen.

Gemäß einer bevorzugten Ausführungsform der Erfindung ist es vorgesehen, dass die elektronischen Baueinheiten, insbesondere Rechnereinheiten, der Stellaggregate einem erkannten Fehler basierend auf lokalen aktorspezfischen Signalen, wie Aktorstrom oder Aktorposition durchführen und bei einer Fehlererkennung eine entsprechende Meldung an das System der Fahrzeuglenkung ausgeben und das fehlerhafte Stellaggregat abschalten. Daher sind die Stellaggregate stromlos offen. Das bedeutet, das abgeschaltete Stellaggregat kann durch das noch funktionstüchtige Stellaggregat bei einer Lenkbetätigung passiv "mitgeschleppt" werden.

Gemäß einer bevorzugten Ausführungsform der Erfindung ist es vorgesehen, dass die Fahrzeuglenkung zwei Sollwertgeber für den einzustellenden Lenkwinkel und zwei den Lenkwinkel der Fahrzeugräder registrierende Istwertgeber aufweist. Somit kann bei einem Ausfall eines Sollwert- und/der Istwertgebers durch den jeweils anderen, noch funktionsfähigen Sollwert- und/der Istwertgeber ein Signal zur Steuerung die Lenkung erzeugt werden.

Gemäß einer bevorzugten Ausführungsform der Erfindung ist es vorgesehen, dass der/die Sollwertgeber für den einzustellenden Lenkwinkel und der/die den Lenkwinkel der Fahrzeugräder registrierenden Istwertgeber redundant ausgeführt sind.

Unter dem Begriff "redundanter Sollwertgeber" ist hier ein Sollwertgeber, vorzugsweise ein Sensor für den Drehwinkel des Lenkhandrads, zu verstehen, der zumindest zwei Meßfühler für den Drehwinkel und mindestens einen Analog-DigitalWandler (A/D-Wandler) und einen Vergleicher aufweist. Der redundante Sollwertgeber ist vorteilhaft "fail-silent" ausgeführt. Das bedeutet, dass sich der Sollwertgeber im Fehlerfall ruhig verhält und keine Steuerfunktionen auf andere Systembauteile ausübt. Durch selbstständiges Überprüfen des Sollwertgebers werden Fehlfunktion festgestellt, wobei mittels des Vergleichers eventuelle Abweichungen zwischen den aus den Meßfühlern ermittelten Werte oder Signale festgestellt werden, die dann zu einem selbstständig Abschalten des Sollwertgebers führen (fail-silent). Das Signal des jeweils anderen, noch funktionstüchtigen redundanten Sollwertgebers wird dann zur Steuerung der Lenkung verwendet.

Der Begriff "redundanter Istwertgeber" bedeutet hier einen Sensor für die Stellung der lenkbaren Räder, insbesondere für den Weg einer zugehörigen Spurstange der Lenkung. Dieser redundante Sensor weist ebenfalls zumindest zwei Meßfühler für den Verstellweg, insbesondere Spurstangenweg und mindestens einen Analog-Digital-Wandler (A/D-Wandler) und einen Vergleicher auf. Der redundante Istwertgeber ist ebenfalls vorteilhaft "fail-silent" ausgeführt und verhält sich im Fehlerfall ruhig und übt dann keine Steuerfunktionen auf andere Systembauteile aus. Durch selbstständiges Überprüfen des Istwertgebers werden Fehlfunktion festgestellt, wobei mittels des Vergleichers eventuelle Abweichungen zwischen den aus den Meßfühlern ermittelten Werten oder Signalen festgestellt werden, die dann zu einem selbstständig Abschalten des Sollwertgebers führen (fail-silent). Das Signal des jeweils anderen, noch funktionstüchtigen redundanten Istwertgebers wird dann zur Steuerung der Lenkung verwendet.

Gemäß einer bevorzugten Ausführungsform der Erfindung ist es vorgesehen, dass als Datenübertragungseinheit ein zumindest zwischen den Stellaggregaten und der Zentralsteuereinheit doppelt ausgeführter Datenbus vorgesehen ist. Das bedeutet jedes Stellaggregat ist mit zwei Datenbusleitungen verbunden, damit bei einem Fehler in einem Bus der jeweils andere Datenbus für die Steuerung der Lenkung zur Verfügung steht.

Gemäß einer anderen bevorzugten Ausführungsform der Erfindung ist es vorgesehen, dass als Datenübertragungseinheit zwischen den Stellaggregaten und der Zentralsteuereinheit jeweils ein Datenbus vorgesehen ist. Hier wird jeweils ein Stellaggregat an jeweils einen Bus angekoppelt, so dass die beiden Stellaggnrgate über jeweils einen im Grundsatz vom anderen Bus unabhängigen Datenbus gesteuert werden. Die beiden Busse sind hier vorzugsweise auch räumlich getrennt ausgeführt, damit beispielsweise kein elektrischer Kurzschluss an einem (gemeinsamen) Stecker, zum Beispiel ein gemeinsamer Stecker bei dem Ein- und Ausgang an der Zentralsteuereinheit, auftreten kann, wodurch die Funktion des gesamten Systems gefährdet wäre. Bei dieser Ausführungsform ist es auch vorgesehen, dass die beiden Busse in einen separaten, vorzugsweise redundanten Fahrzeugrechner gekoppelt sind. Das bedeutet in diesem zentralen Fahrzeugrechner, der vorzugsweise auch noch weiter Fahrzeugfunktionen, wie Bremssystem oder Motormanagement steuern kann, werden beide Busse der Lenkung zusammengeführt und über die beiden Busse anliegende Informationen ausgewertet und ausgetauscht. Damit wird jedem an den Bussen angeschlossenen Teilnehmer übermittelt, welche Teilnehmer vorhanden sind und ggf. welchen Status diese haben, wodurch bei einer Störung oder einem Ausfall eines Teilnehmers die anderen Teilnehmer entsprechend reagieren können.

Gemäß einer bevorzugten Ausführungsform der Erfindung ist es vorgesehen, dass die Datenbusse Teil eines Fahrzugbussystems, insbesondere CAN sind.

Gemäß einer bevorzugten Ausführungsform der Erfindung ist es vorgesehen, dass die Zentralsteuereinheit mit einem Fahrzeugbussystem, insbesondere CAN, verbunden ist, zum Empfang von Informationen über den insbesondere aktuellen Fahrzeugzustand.

Gemäß einer bevorzugten Ausführungsform der Erfindung ist es vorgesehen, dass die Lenkbetätigungseinrichtung antriebsmäßig mit einem mechanischen oder mechanisch-hydraulischen, ersten Betätigungskraftsimulator verbundenen ist, zur Simulierung eines bestimmten, vorgegebenen Betätigungswiderstands, insbesondere Drehwiderstands, und dass die Lenkbetätigungseinrichtung mit einem elektrisch betätigbaren, vorzugsweise parameterabhängigen, zweiten Betätigungskraftsimulator, wirkungsmäßig verbunden ist, der nach Maßgabe zumindest des Istwerts und gegebenenfalls weiterer Signale, insbesondere dynamische Fahrzeugzustands-Signale, wie Fahrzeuggeschwindigkeit, Fahrzeug-Gierwinkel, Fahrzeug-Längs- oder Querbeschleunigung, oder Fahrbahnzustands-Signale, wie aktuelle Haftreibung, den zweiten Betätigungskraftsimulator steuert. Der Betätigungskraftsimulator ist damit "fail-safe" ausgebildet: der erste Betätigungskraftsimulator dient als Rückfallebene bei einem Ausfall des zweiten Betätigungskraftsimulators. Vorzugsweise weist der erste Betätigungskraftsimulator elastische Mittel auf, um der Lenkbetätigungseinrichtung eine dem Fahrer zumindest annähernd gewohnte Betätigungskraft aufzuprägen. Vorteilhaft ist der erste Betätigungskraftsimulator so ausgelegt, dass der elastische Widerstand progressiv anwächst, wenn die Lenkbetätigungseinrichtung aus einer Mittellage zunehmend wegbewegt, insbesondere verdreht, wird.

Gemäß einer bevorzugten Ausführungsform der Erfindung ist es vorgesehen, dass die Zentralsteuereinheit mit einem elektronischen Fahrzeugbremssystem, insbesondere einem elektromechanischen Bremssystem (EMB), verbunden ist.

Gemäß einer bevorzugten Ausführungsform der Erfindung ist es vorgesehen, dass die dass die jeweils zwei elektromechanischen Stellaggregate zum Steuern jeweils eines rechts und links an einem Fahrzeugkörper befindlichen lenkbaren Rades eines Radpaares einer lenkbarer Fahrzeugachse in Verbindung mit mindestens einer Lenkstange (Spurstange) als ein Achslenkmodul ausgebildet sind.

Gemäß einer bevorzugten Ausführungsform der Erfindung ist es vorgesehen, dass die Zentralsteuereinheit der Fahrzeuglenkung und eine Zentralsteuereinheit des elektronischen Fahrzeugbremssystem als einzelne Module in einem gemeinsamen Gehäuse angeordnet sind.

Gemäß einer bevorzugten Ausführungsform der Erfindung ist es vorgesehen, dass für die Fahrzeuglenkung und das elektronische Fahrzeugbremssystem eine gemeinsame Zentralsteuereinheit vorgesehen ist.

Gemäß einer bevorzugten Ausführungsform der Erfindung ist es vorgesehen, dass die jeweils zwei elektromechanischen Stellaggregate zum Steuern jeweils eines rechts und links an einem Fahrzeugkörper befindlichen lenkbaren Rades eines Radpaares einer lenkbarer Fahrzeugachse in Verbindung mit mindestens einer Lenkstange als ein Achslenkmodul ausgebildet sind.

Gemäß einer bevorzugten Ansführungsform der Erfindung ist ein Achslenkmodul mit zwei elektromechanischen Stellaggregaten vorgesehen, die jeweils einen elektrischen Motor aufweisen und die jeweils einem rechts und links an einem Fahrzeugkörper befindlichen lenkbaren Rad eines Radpaares einer lenkbarer Fahrzeugachse zugeordnet sind und miteinander über eine Verbindungseinrichtung verbindbar sind, so dass die beiden lenkbaren Räder über ein einziges Stellaggregat verschwenkbar sind, wobei jedem Stellaggregat zumindest zwei Elektronikeinheiten zugeordnet sind und im Fall eines Fehlers eines der beiden Elektronikeinheiten die jeweils andere, noch funktionstüchtige Elektronikeinheit die Steuerung des Stellaggregats übernimmt.

Gemäß einer bevorzugten Ausführungsform der Erfindung ist es vorgesehen, dass die Fahrzeuglenkung zumindest eine als Schubstange ausgebildete Lenkstange aufweist, die in ihrer Verlängerung verbindbar ist mit Spurstangen für die beiden lenkbaren Räder und bei der koaxial Lenkstangenachse die zwei Elektromotoren vorgesehen sind, die jeweils einen Rotor aufweisen, der über eine Übertragungseinrichtung mit einem Rotations-Translationswandler verbunden ist, zur Einkopplung eines Motormoments auf die mindestens eine Lenkstange, um bei Betätigung zumindest eines Elektromotors über ein Verschieben der mindestens einen Lenkstange die Lenkfunktion des Achslenkmoduls sicherzustellen.

Gemäß einer bevorzugten Ausführungsform der Erfindung ist es vorgesehen, dass die Übertragungseinrichtung Mittel zur direkten Kopplung mit dem Rotations-Translationswandler aufweisen.

Gemäß einer bevorzugten Ausführungsform der Erfindung ist es vorgesehen, dass die Übertragungseinrichtung Mittel zur direkten Kopplung mit dem Rotations-Translationswandler aufweisen.

Gemäß einer bevorzugten Ausführungsform der Erfindung ist es vorgesehen, dass der Rotations-Translationswandler ein Gewindetrieb, vorzugsweise ein Kugelgewindetrieb, ist.

Gemäß einer bevorzugten Ausführungsform der Erfindung ist es vorgesehen, dass der Rotations-Translationswandler antriebsmäßig verbunden ist mit mindestens einer zumindest in einem Bereich oder Teilbereich des Achslenkmoduls gewindestangenartig ausgebildeten Lenkstange (Gewindestange), die von mindestens einer Gewindemutter umgeben ist und mit dieser verbunden ist über dazwischen angeordnete Wälz- oder Rollkörper mit einer zum Gewinde der mindestens einen Gewindestange passenden Profilierung.

Gemäß einer bevorzugten Ausführungsform der Erfindung ist es vorgesehen, dass die Übertragungseinrichtungen Getriebe oder Kupplungen, vorzugsweise Planetengetriebe, sind.

Gemäß einer bevorzugten Ausführungsform der Erfindung ist es vorgesehen, dass der Elektromotor einen Stator mit einer Wicklung koaxial zur Lenkstange umfasst und einen um diesen drehgelagerten Rotor mit Permanentmagneten, vorzugsweise ei Seltenerdmagnete, insbesondere Kobalt Samarium oder Neodym-Magnete, aufweist.

Gemäß einer bevorzugten Ausführungsform der Erfindung ist es vorgesehen, dass dass der Elektromotor ein elektronisch kommutierter Gleichstrommotor ist, der vorzugsweise ausgebildet ist als Transversatflussmotor.

Gemäß einer bevorzugten Ausführungsform der Erfindung ist es vorgesehen, dass der Rotor des Elektromotors über die Übertragungseinrichtung mit der Gewindemutter des Gewindetriebs spielfrei und formschlüssig rotatorisch gekoppelt ist

Gemäß einer bevorzugten Ausführungsform der Erfindung ist es vorgesehen, dass der Rotor des Elektromotors zumindest in einem Teilbereich als ein Teil der Übertragungseinrichtung, vorzugsweise als ein Sonnenrad eines Planetenradgetriebes ausgebildet ist.

Gemäß einer bevorzugten Ausführungsform der Erfindung ist es vorgesehen, dass jedem Stellaggregat zumindest zwei Elektronikeinheiten zugeordnet sind und im Fall eines Fehlers eines der beiden Elektronikeinheiten die jeweils andere, noch funktionstüchtige Elektronikeinheit die Steuerung des Stellaggregats übernimmt.

Gemäß einer bevorzugten Ausführungsform der Erfindung ist es vorgesehen, dass im Fall eines Fehlers eines Stellaggregats bzw. eines Elektromotors, durch das noch funktionstüchtige Stellaggregat bzw. den Elektromotor die Schwenkbewegung der Räder durchgeführt wird, wobei die Baueinheit des fehlerhaften Stellaggregats rein mechanisch durch eine mechanische Kopplung über die Verbindungseinrichtung, insbesondere über die mindestens eine Gewindemutter und den mindestens einen Gewindetrieb mitschleppt werden.

Gemäß einer bevorzugten Ausführungsform der Erfindung ist es vorgesehen, dass zur Aufnahme der entstehenden Stellkräfte auf die mindestens eine Lenkstange mindestens ein Lager, vorzugsweise ein Axial-Schrfigkugellager, vorgesehen ist, das einen Innring aufweist, zur Aufnahme der Gewindemutter und zumindest eines Bauteils der Übertragungseinrichtung, vorzugsweise von Planetenträgem eines Planetenradgetriebes oder einer Kupplung, und das einen Außenring aufweist, zur Einleitung der entstehenden Stellkräfte in ein Gehäuse oder ein mit dem Gehäuse kraftschlüssig verbundenem Bauteil des Achslenkmoduls.

Gemäß einer bevorzugten Ausführungsform der Erfindung ist es vorgesehen, dass dem Außenring des Lagers mindestens ein Kraftsensor zugeordnet ist, zur Erfassung der wirkenden Stellkräfte und zur Rückkopplung dieser ermittelten Stellkräfte an die Handbetätigungseinrichtung; vorzugsweise Handienkrad der Fahrzeuglenkung.

Gemäß einer bevorzugten Ausführungsform der Erfindung ist es vorgesehen, dass der Stator des Elektromotors an einem Gehäuse oder ein mit dem Gehäuse kraftschlüssig verbundenem Bauteil des Achslenkmoduls angeordnet ist und der Rotor der Elektromotors über ein Festlager und ein Loslager mit einem Gehäuse oder ein mit dem Gehäuse kraftschlüssig verbundenem Bauteil des Achslenkmoduls drehbar gelagert sind.

Gemäß einer bevorzugten Ausführungsform der Erfindung ist es vorgesehen, dass jedes Stellaggregate als Übertragungseinrichtungen ein Planetenradgetriebe aufweist, dessen Sonnenrad als Bauteile des Rotors ausgeführt ist und sich gegen ein Hohlrad abstützt, das Teil des Außenrings eines Lagers zur Aufnahme der Stellkräfte ist

Gemäß einer bevorzugten Ausführungsform der Erfindung ist es vorgesehen, dass den zwei Stellaggregaten eine gemeinsame als Schubstange ausgebildete Lenkstange, vorzugsweise eine gemeinsame Gewindestange, und ein gemeinsamer Rotations-Translationswandler, insbesondere einer gemeinsamen Gewindemutter und gemeinsamen dazwischen angeordneten Wälz- oder Rollkörpem, zugeordnet ist, um bei Betätigung zumindest eines Stellaggregats über ein Verschieben der Lenkstange die Lenkfunktion des Achslenkmoduls sicherzustellen.

Gemäß einer bevorzugten Ausführungsform der Erfindung ist es vorgesehen, dass jedem der beiden Stellaggregate jeweils eine als Schubstange ausgebildete Lenkstange, vorzugsweise jeweils eine Gewindestange, und jeweils ein Rotations-Translationswandler, insbesondere jeweils eine Gewindemutter und jeweils dazwischen angeordnete Wälz- oder Rollkörpem, zugeordnet ist und dass beiden Stellaggregaten eine Verbindungseinrichtung zugeordnet ist, um die beiden Stellaggregate zu verbinden und bei Betätigung eines Stellaggregats über ein Verschieben der zwei verbundenen Lenkstangen die Lenkfunktion des Achslenkmoduls sicherzustellen.

Gemäß einer bevorzugten Ausführungsform der Erfindung ist es vorgesehen, dass die Verbindungseinrichtung eine elektromechanische Kupplung aufweist, die Kupplungsscheiben aufweist, die mit Innenringen von zwei Lagern, vorzugsweise Axial-Schrägkugellagern, kraftschlüssig verbunden sind, die zur Aufnahme der auf die zwei Lenkstangen entstehenden Stellkräfte dienen und dass im unbestromten Zustand die beiden Kupplungsscheiben durch ein elastisches Mittel, vorzugsweise eine Druckfeder, gegeneinander gepresst werden und eine kraftschlüssige Verbindung zwischen den zwei Rotations-Translationswandlem der Stellaggregate herstellen.

Gemäß einer bevorzugten Ausführungsform der Erfindung ist es vorgesehen, dass ein bestimmter maximaler Verstellbereich der zwei Lenkstangen gegeneinander vorgegeben wird mittels mechanischer Anschläge, die nur einen bestimmten Lenkstangen-Differenzweg der zwei Lenkstangen relativ zueinander zulassen.

Gemäß einer bevorzugten Ausführungsform der Erfindung ist es vorgesehen, dass zumindest ein Teilbereich der einen von den beiden Lenkstangen als eine Hohlwelle ausgebildet ist, die zwei Anschläge aufweist und dessen Hohlraum von einer mit der anderen Lenkstange verbundenen Koppelstange durchdrungen wird, die ein hohlwellenseitiges Endstück aufweist, das zwei innere Anschläge und zwei äußere Anschläge aufweist, die im Zusammenwirken mit zwei gegen die Anschläge abstützbaren Mitnehmerscheiben und einer an den Mitnehmerscheiben sich abstützenden Druckfeder nur einen bestimmten Lenkstangen-Differenzweg der zwei Lenkstangen relativ zueinander zulässt.

Gemäß einer bevorzugten Ausführungsform der Erfindung ist es vorgesehen, dass bei geschlossener elektromechanischer Kupplung die Koppelstange eine Ausgangsstellung definiert, bei der die Druckfeder eine maximale Länge aufweist und sich durch die beiden Mitnehmerscheiben auf die zwei äußeren Anschläge der Koppelstange und die beiden Anschläge der Hohlwelle abstützt und dass bei geöffneter elektromechanischer Kupplung eine erste und eine zweite Endstellung definiert wird, welche den maximalen Lenkstangen-Differenzweg festlegen, wobei bei der ersten Endstellung die Druckfeder eine minimale Länge aufweist und sich durch die beiden Mitnehmerscheiben einerseits auf einen ersten Anschlag der Hohlwelle und anderseits auf einen zweiten äußeren Anschlag der Koppelstange abstützt und wobei bei der zweiten Endstellung die Druckfeder eine minimale Länge aufweist und sich durch die beiden Mitnehmerscheiben einerseits auf einen zweiten Anschlag der Hohlwelle und anderseits auf einen ersten äußeren Anschlag der Koppelstange abstützt.

Die erfindungsgemäße Fahrzeuglenkung wird nun anhand von Ausführungsbeispielen und von vier Abbildungen (Fig.1 bis Fig.3) näher erläutert.

Es zeigen:
- Fig. 1: die erfindungsgemäße Fahrzeuglenkung in schematischer Darstellung,
- Fig. 2: eine schaltplanartige Darstellung der erfindungsgemäßen Fahrzeuglenkung mit redundanten Steuerungskomponenten,
- Fig. 2a: eine schaltplanartige Darstellung einer anderen Ausführungsform der erfindungsgemäßen Fahrzeuglenkung mit redundanten Steuerungskomponenten und
- Fig. 3: eine schaltplanartige Darstellung der erfindungsgemäßen Fahrzeuglenkung in Verbindung mit einer elektromechanischen Bremse.

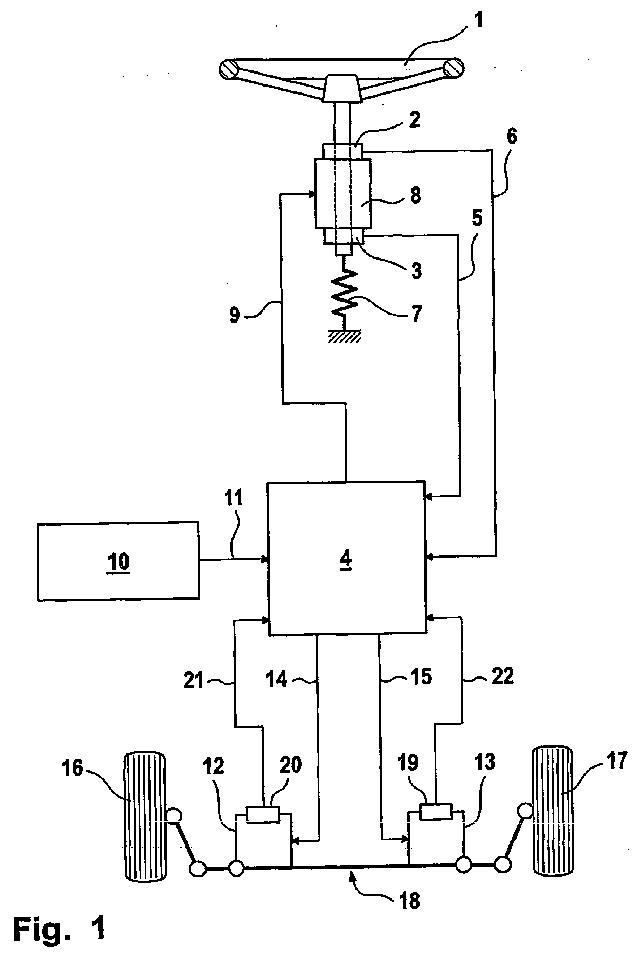

Fig. 1 zeigt die erfindungsgemäße Fahrzeuglenkung in schematischer Darstellung. Der Fahrer betätigt das Lenkhandrad 1 oder ein ähnliches Bedienelement, z.B. einen Sidestick, mit dem er seinen Fahrtrichtungswunsch vorgeben kann. Der Fahrtrichtungswunsch wird in diesem Fall als Drehwinkel des Lenkhandrads 1 durch zwei Sensoren 2,3 redundant erfasst und auf elektronischem Wege einer Zentralsteuereinheit 4 mitgeteilt mittels der Datenübertragungsleitungen 5,6. Ober einen ersten, passiven Betätigungskraftsimulator 7 erhält der Fahrer eine haptische Rückwirkung bei der Lenkbetätigung. Über einen zweiten, elektromechanischen Betätigungskraftsimulator 8 kann diese Rückwirkung bei Bedarf verstärkt oder geschwächt werden. Der zweite, elektromechanische Betätigungskraftsimulator 8 wird über die Datenübertragungsleitung 9 von der Zentralsteuereinheit 4 gesteuert. Der Zentralsteuereinheit 4 werden vorzugsweise auch Signale einer Fahrzeuggeschwindigkeits-Erfassungseinrichtung 10 über eine Datenübertragungsleitung 11 übermittelt. Dann werden in der Zentralsteuereinheit 4 Algorithmen umgesetzt, die das Lenkmoment in Abhängigkeit der Geschwindigkeit verändern. Der Fahrerwunsch wird in der Zentralsteuereinheit 4 ausgewertet, in einen Lenkwinkel (Sollwert) für zwei Stellaggregate 12,13 umgerechnet und den Stellaggregaten 12,13 über eine Datenübertragungsleitung 14,15 zugeführt. Es sind pro lenkbarem Rad 16,17 einer lenkbaren Achse 18 jeweils ein Stellaggregat 12,13 vorgesehen, so dass im Grundsatz auch eine radindividuelle Steuerung des rechten Rades 16 und des linken Rades 17 möglich ist. Der aktuelle Istwert der Radstellung der lenkbaren Räder 16,17 wird mittels geeigneter Sensoren 19,20 über je eine Datenübertragungsleitung 21,22 der Zentralsteuereinheit 4 übermittelt.

Zwischen dem Lenkhandrad 1 und den lenkbaren Räder 16,17 ist somit keine direkte mechanische Verbindung vorhanden. Durch diese erfindungsgemäße mechanische Entkopplung des Lenkhandrades 1 von der lenkbaren 18 Achse kann die Lenksäule entfallen, wodurch sich bessere Einbauverhältnisse im Vorbau und ein besseres Crashverhalten des Fahrzeugs ergeben. Durch die Entkopplung zwischen Fahrer und Rad 16,17 wird der Fahrer nicht mehr durch Lenkradschwingungen, die vom Rad 16,17 angeregt werden, irritiert. Darüber hinaus ermöglicht diese Lenkung die Integration einer Lenkassistent-Funktion, um eine Oberreaktionen durch den Fahrer bei seiner Lenkbetätigung zu kompensieren. Durch die elektronische Regelung der Stellaggregate 16,17 kann bei einer entsprechenden Auslegung und Verbindung mit einer Fahrstabilitätsregelung (ESP) besonders vorteilhaft eine Verbundregelung realisiert werden. Dann wird der Lenkwinkel auch zur Erhöhung der Fahrstabilität verändert. Ferner weist die erfindungsgemäße Lenkung den Vorteil auf, dass aufgrund der Entkopplung zwischen rechtem und linkem Rad 16,17 der lenkbaren Achse 18 ein relativ kleiner Wendekreis des Fahrzeugs und zugleich eine relativ hohe Spurstabilität des Fahrzeugs realisiert werden kann. Auch die Montage der erfindungsgemäßen Lenkung ist gegenüber bekannten Lenkungen einfacher, da keine mechanische Verbindung zwischen lenkbarer Achse 18 und Lenkhandrad 1 hergestellt werden muss.

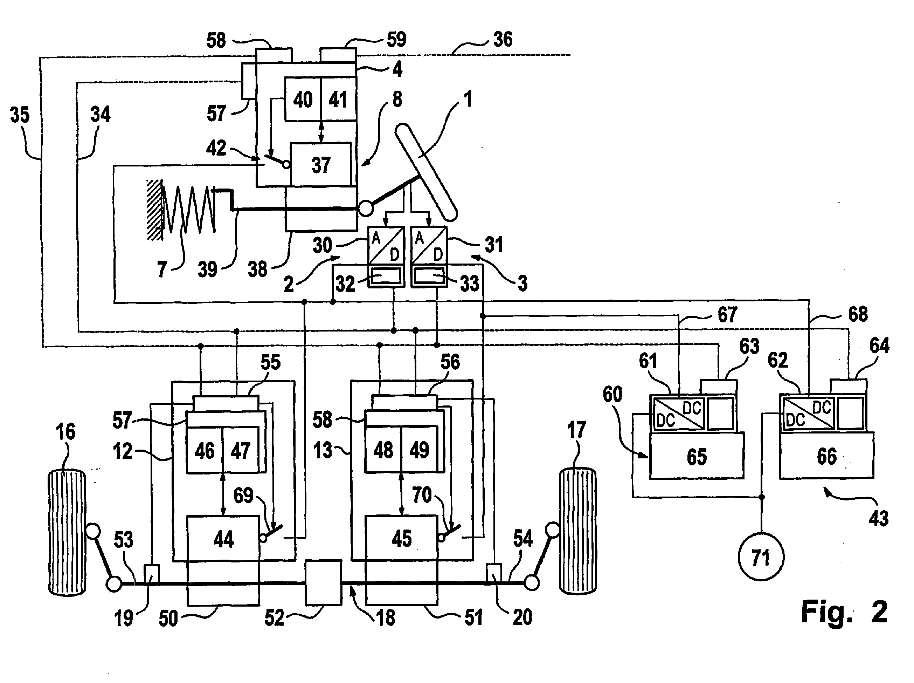

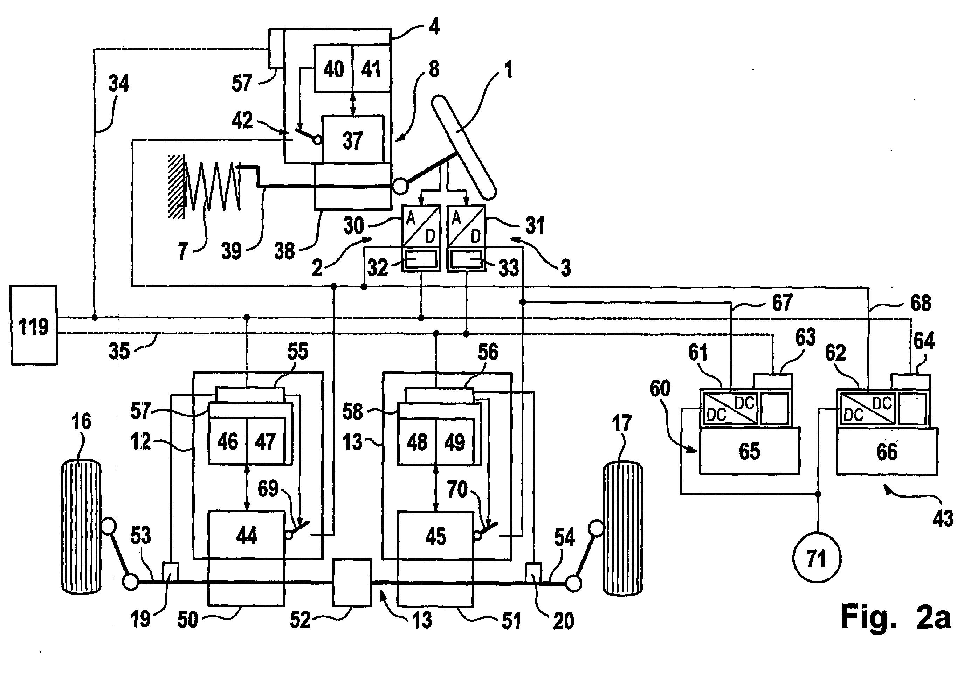

In der Fig. 2 ist das Systemkonzept der erfindungsgemäßen Fahrzeuglenkung dargestellt, mit redundanter Sensorik und redundanter Auswerteschaltung, wobei für diese und die folgende Abbildung gilt, dass die zu Fig. 1 gleichen Bauteile der Lenkung auch mit denselben Bezugszeichen versehen wurden. Der Fahrer betätigt das Lenkhandrad 1 zur Vorgabe seines Fahrtrichtungswunsches. Dieser vom Fahrer eingestellte Wunsch, wird sensorisch redundant erfasst durch zwei jeweils einen A/D-Wandler 30,31 und einen Ausgang 32,33 aufweisende redundante Sensoren 2,3. Die Signale der Sensoren 2,3 werden der Zentralsteuereinheit 4 auf elektronischem Wege, vorzugsweise über ein redundantes Bussystem 34,35 (zwei Datenleitungen) mitgeteilt. In der Zentralsteuereinheit 4, die auch die Ansteuerung des zweiten, elektromechanischen Betätigungskraftsimulator 8 übernimmt, werden auch Algorithmen umgesetzt, die das Lenkmoment in Abhängigkeit der Geschwindigkeit (Parameterlenkung) verändern. Darüber hinaus kann eine zu heftige Lenkreaktion des Fahrers stärker gedämpft werden (Lenkassistent). Auch eine Gierreaktion aufgrund von Seitenwind kann über einen zusätzlichen Lenkwinkel kompensiert werden, da vorzugsweise auch Informationen über den aktuellen Fahrzustand via Fahrzeugbussystem, insbesondere CAN 36, eingelesen werden können.

Über den ersten, passiven Betätigungskraftsimulator 7 wird ein über den gesamten Lenkwinkelbereich ein leicht ansteigendes Rückstellmoment und bei schnellen Lenkbewegungen auch ein die Bewegung dämpfendes Moment erzeugt. Über einen zweiten, elektromechanischen Betätigungskraftsimulator 8 kann diese Rückwirkung bei Bedarf verstärkt oder geschwächt werden. Dazu erzeugt ein Motor 37 ein Moment über ein Getriebe 38 an eine mit dem Lenkhandrad 1 verbundene Achse 39. Dadurch kann das System dem Fahrer beispielsweise eine Rückmeldung über die Situation, wie Aquaplaning, Bordstein, Niedrigreibwert, auf der Straße geben.

Der Fahrerwunsch wird in der Zentralsteuereinheit 4 ausgewertet und in Stellsignale für die Stellaggregate 12,13 umgerechnet. Durch die efindungsgemäß im Grundsatz unabhängigen Stellaggregate 12,13 kann der Lenkwinkel zwischen dem rechten und dem linken Rad 16,17 einer lenkbaren Achse 18, vorzugsweise der Vorderachse 18, zumindest in bestimmten Grenzen unabhängig voneinander eingestellt werden. Damit ist es möglich, ein Optimum zwischen Wendekreis, Reifenverschleiß und Geradeauslauf realisieren.

Die Zentralsteuereinheit 4 ist vorzugsweise nach der "fail-silent-Architektur" aufgebaut und weist zwei redundante Rechner 40,41 auf. Die Betätigungseinheit hat vorteilhaft eine "fail-safe-Architektur". Das bedeutet, der zweite, elektromechanische Betätigungskraftsimulator 8 ist stromlos offen und durch einen Schalter 42 abschaltbar und erzeugt kein Moment bei einem Ausfall der elektrischen Energiequelle 43. Im Fehlerfall erfährt der Fahrer eine haptische Rückwirkung durch den ersten Betätigungskraftsimulator 7. Wenn kein Fehler vorliegt, werden die Kräfte ermittelt, die von dem Stellaggregat 12,13 gestellt werden. Dies erfolgt vorzugsweise durch Messen der Ströme an den Motoren 44,45 der Stellaggregate 12,13 sowie des Verstellwegs an den Stellaggregaten 12,13. Die Zentralsteuereinheit generiert aus den ermittelten Kräften Ansteuersignale für den zweiten, elektromechanischen Betätigungskraftsimulator 8. Dadurch erhält der Fahrer eine zu dem ersten, passiven Betätigungskraftsimutator 7 überlagerte haptische Rückmeldung über den auf der Fahrbahn wirkenden Kraftschluss.

Die Stellaggregate 12,13 weisen jeweils einen Elektromotor 44,45 auf, die vorzugsweise in einem Gehäuse eine redundante Elektronikeinheit 57,58, mit insbesondere Leistungsendstufen und Logikbausteinen, wobei für jede Elektronikeinheit 57,58 jeweils zwei Rechner 46-49 vorgesehen sind. Die Elektronikeinheiten 57,58 treiben die Aktuatoren an. Der Abtrieb erfolgt über eine Getriebeeinheit 50,51, die je nach Übersetzungsbedarf eine Rot/Rot-Getriebe und ein Rot/Trans-Getriebe umfassen kann (hier nicht dargestellt). Beide Aktuatoren, das bedeutet die Elektromotoren 44,45 und Getriebeeinheiten 50,51, können in einem gemeinsamen Gehäuse angeordnet werden. In diesem Fall ist es vorgesehen, eine Trennwand zwischen den Gehäusehälften anzuordnen, damit durch eine undichte Dichtung eindringendes Wasser nicht beide Aktuatoren zerstören kann. Zwischen den Aktuatoren ist eine Kupplung 52 vorgesehen, die abtriebsseitig die beiden Getriebe 44,45 verbindet und einen bestimmten Verdrehwinkel zwischen den einzelnen Aktuatoren zulässt. Die Verdrehwinkel bewirkt einen unterschiedlichen Stellweg für die rechte und die linke Spurstangenseite 53,54. Der Verdrehwinkel wird dabei mechanisch begrenzt, da bei einem Ausfall ein Stellaggregat 12 oder 13 die Lenkaufgabe von beiden Stellaggregaten 12,13 übemehmen kann.

Die Elektronik 46,47,48,49 der Stellaggregate 12,13 und die Elektronik 40,41 der Zentralsteuereinheit 4 weisen jeweils Ein- und Ausgänge 55-58 für die zwei Datenübertragungsleitungen 34,35 des Lenkungs-Bussystems auf. Die Zentralsteuereinheit 4 kann darüber hinaus auch einen Ein- und Ausgang 59 für die Datenübertragungsleitung des Fahrzeug-Bussystems, wie CAN, aufweisen. Die Datenübertragungsleitungen 34,35 des Lenkungs-Bussystems sind auch in Verbindung mit einem den Energiequellen 43,60 zugeordneten elektronischen Baueinheiten 61,62, die insbesondere Spannungswandler und Regler sowie einen Eingang und Ausgang 63,64 aufweisen. Da die zwei unabhängigen Energiequellen, insbesondere die zwei Fahrzeugbatterien 65,66, jeweils ein Stellaggregat 12,13 sowie jeweils eine Elektronikeinheit 40, 41 der Zentralsteuereinheit 4 über die Leitungen 67,68 mit elektrischer Energie versorgen, wird bei einem Ausfall zumindest die Steuerung und Funktion eines Stellaggregats 12 oder 13 sichergestellt. So können durch die vorzugsweise stromlos offene Kupplung 52 auch bei dem Ausfall eines Stellaggregats 12 oder 13, das jeweils andere Stellaggregat 12 oder 13 die Funktion der Lenkung sicherstellen und das jeweils nicht funktionsfähige Stellaggregat 12 oder 13 wird durch einen stromlos offenen Schalter 69,70 ausgeschaltet. Die zwei Fahrzeugbatterien 63,64 werden über einen Fahrzeuggenerator 71 geladen.

In der Fig. 2a ist eine andere Ausführungsform der erfindungsgemäßen Fahrzeuglenkung mit redundanten Steuerungskomponenten und einem zentralen Fahrzeugrechner 119 dargestellt. Im Unterschied zu der in Fig. 2 gezeigten Ausführungsform sind hier die Stellaggregate 12,13 an je einen Bus 34,35 gekoppelt. Vorteilhaft kann ein Kurzschluss am Ein- und Ausgang eines Stellaggregats nicht zu einem Verlust der Funktionsfähigkeit des gesamten Systems führen. Die Busse 34 und 35 sind hier auch räumlich getrennt. Es kann vorteilhaft ferner ein zentraler Fahrzeugrechner 119 vorgesehen sein, wodurch die Informationen der im Grundsatz unabhängigen Busse 34,35 gegenseitig übertragen werden, damit jeder Teilnehmer der Bussysteme die Information erhält, welche Teilnehmer dem System noch zur Verfügung stehen. So können diese auf einen Ausfall anderer Teilnehmer entsprechend reagieren und beispielsweise deren Funktion ersetzen. Es ist hier ebenfalls ein mechanischer Betätigungskraftsimulator 7 vorgesehen, der als "Rückfallebene" bei einem Ausfall des elektromechanischen Betätigungskraftsimulators 7 dient ("fail-safe"), der durch die Zentralsteuereinheit 4 gesteuert wird, die ebenfalls redundant und "fail-silent" ausgeführt ist.

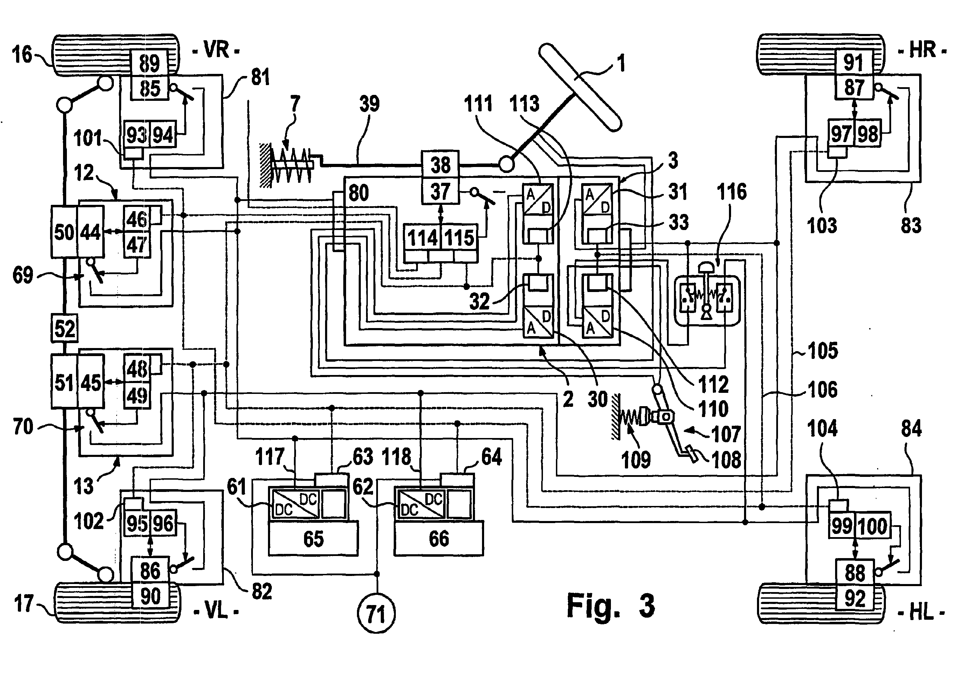

In Fig. 3 ist ein System dargestellt, bei dem das erfindungsgemäße Lenksystem und ein elektromechanisches Bremssystem (EMB) verbunden sind. Das System der Fahrzeuglenkung entspricht im wesentlichen dem in Fig.2 gezeigten System, wobei hier eine Zentralsteuer- und regelungseinheit (Zentraleinheit) 80 die Steuerung und Regelung der Fahrzeuglenkung und der Fahrzeugbremsen übernimmt.

Die Radbremsmodule 81-84 weisen als Aktuatoren 85-88 vorzugsweise Elektromotoren auf, die über Getriebe 89-92 eine bestimmte Bremskraft erzeugen und vorzugsweise über Bremsbeläge auf Bremsscheiben übertragen. Die Radbremsmodule 81-84 weisen auch jeweils zwei Rechner 93-100 auf, mit Ein- und Ausgängen 101-104 zu einem kombinierten Brems- und Lenkungs-Bussystem 105,106. Der Fahrerbremswunsch wird über eine Bremsbetätigungseinrichtung 107, mit einem Bremspedal und einem Betätigungswegsimulator 109 übertragen und mit redundanten Wegsensoren und/oder Kraftsensoren 110,111 ermittelt und über Ausgänge 112,113 über das Bussystem 105,106 zwei redundanten Zentralrechnern 114,115 der Zentralsteuer- und Regelungseinheit 80 übermittelt. Ferner ist eine Feststellbremsenbetätigungseinrichtung 116 vorgesehen, mittels der ebenfalls ein Bremswunsch des Fahrer übertragen werden kann über die zwei redundanten Wegsensoren und/oder Kraftsensoren 110,111.

In dieser Ausführungsform der Erfindung übernimmt die Zentraleinheit 80 neben der Ansteuerung der Stellaggregate 12,13 und Radbremsmodule 81-84 und der Ansteuerung des Betätigungskraftsimulators 8 auch die Auswertung der Betätigungssensorik für Lenkung, Bremse und Feststellbremse. Entsprechend den Signalen werden Radbremsmodule 81-84 und/oder die Stellaggregate 12,13 mit Stellbefehlen versorgt. Fällt die Zentraleinheit 80 aus, liegen die Informationen der Betätigungssensorik auch auf den beiden Bussystemen vor. Denn jedes Stellaggregate 12,13 und Radbremsmodul 81-84 hat die für sie bestimmten Information und generiert daraus selbstständig Stellgrößen. Darüber hinaus ist auch bei einem Ausfall einer Energiequelle 43 oder 60 die Funktion der Lenkung und der Bremse sichergestellt. Denn jeweils eine Energiequelle versorgt jeweils ein Stellaggregat und zwei Radbremsmodule sowie jeweils eine redundate Einheit der Betätigungssensorik für die Lenkung und für die Bremse über zwei getrennte, unabhängige Stromleitungen 117,118. Insgesamt bietet das System dadurch eine große Ausfallssicherheit sowie hinreichende "Notfunktionen" im Fehlerfall.

Darüber hinaus ist durch die Zentraleinheit 80 ein aktiver Eingriff in die fahrerwunschabhängige Steuerung bzw. Regelung von Bremse und Lenkung möglich. Dabei ist im Sinne der Erfindung auch ein zusätzlicher Eingriff in das Motormanagement vorgesehen, wie es beispielsweise schon bei Fahrdynamikregelungen (ESP) oder Antriebsschlupfregelungen (ASR) durchführbar ist. Insgesamt kann das erfindungsgemäße System den Fahrer unterstützen und das Fahrzeug im Hinblick auf größtmögliche Sicherheit und Fahrkomfort lenken, radindividuell abbremsen oder beschleunigen. Daher ist das System auch bevorzugt für Fahrerassistenzsysteme, wie automatische Geschwindigkeitsregelung (Tempomat, CC) oder Abstands- und Folgeregelungen (ACC, AICC) geeignet.

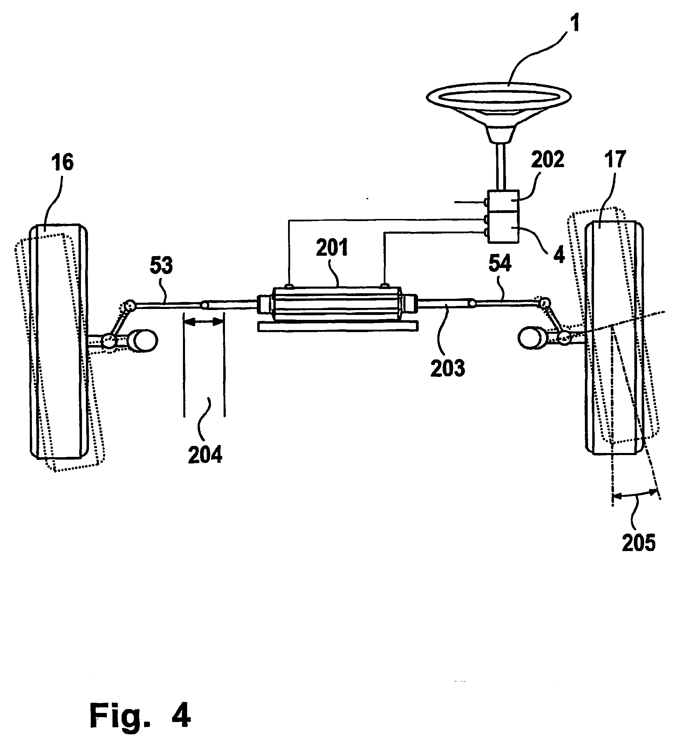

Das erfindungsgemäße Achslenkmodul für die Fahrzeuglenkung wird nun anhand von Ausführungsbeispielen und von Abbildungen (Fig.4 bis Fig.14) näher erläutert.

Es zeigen:
- Fig.4: die erfindungsgemäße Fahrzeuglenkung mit einem Achslenkmodule mit zwei Stellaggregaten

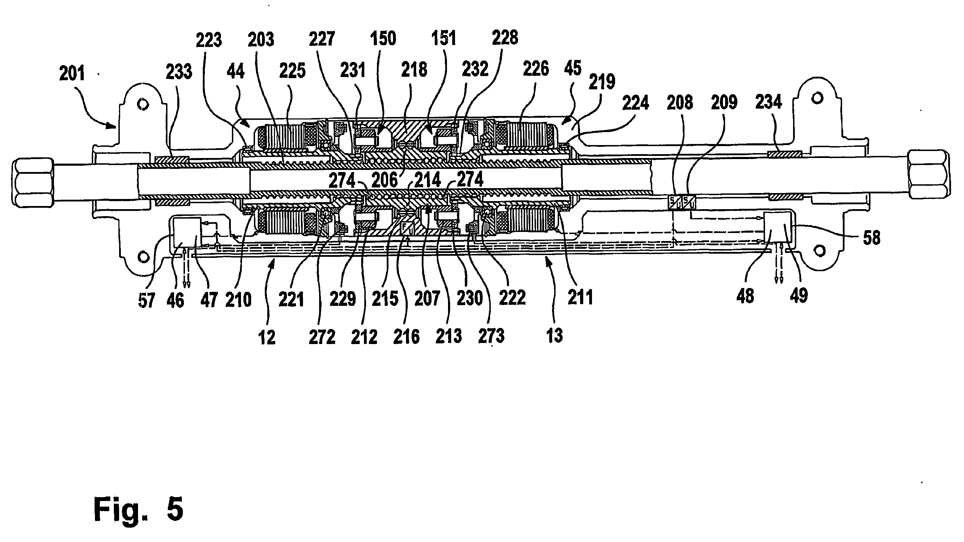

- Fig.5: einen Schnitt durch ein erfindungsgemäßes Achslenkmodul mit einer durchgehenden Lenkstange, mit einem Kugelgewindetrieb und mit Planetenradgetrieben

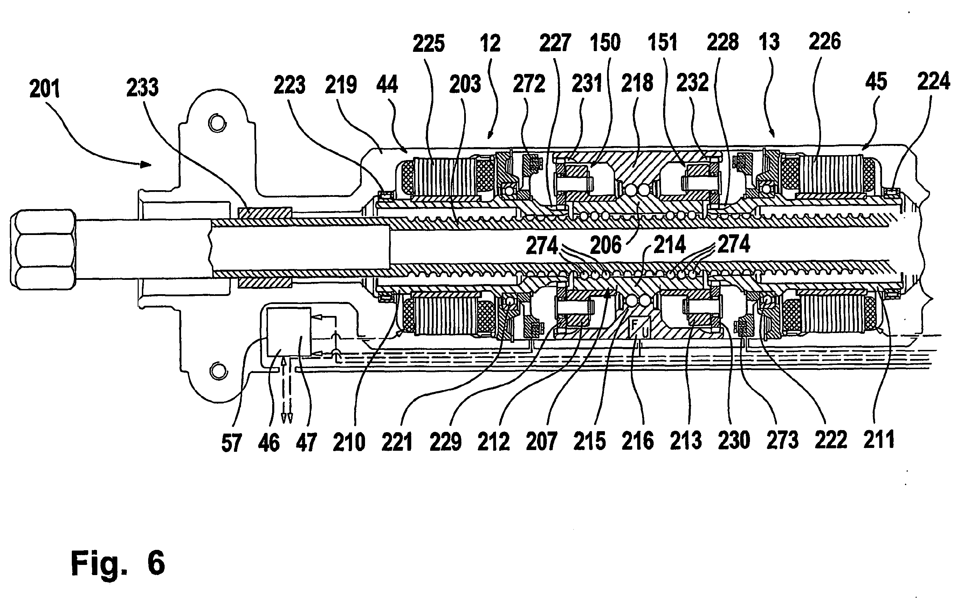

- Fig.6: einen Ausschnitt aus dem in Fig.5 gezeigten Schnitt durch das erfindungsgemäße Achslenkmodul in vergrößerter Darstellung

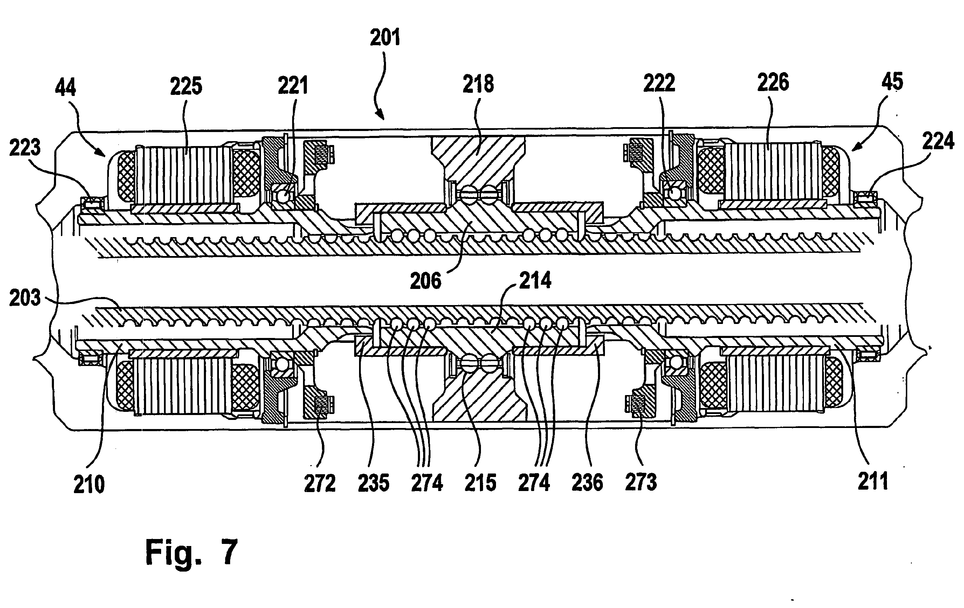

- Fig.7: einen Schnitt durch ein erfindungsgemäßes Achslenkmodul mit einer durchgehenden Lenkstange, mit einem Kugelgewindetrieb und mit Kupplungen anstatt der Planetenradgetriebe

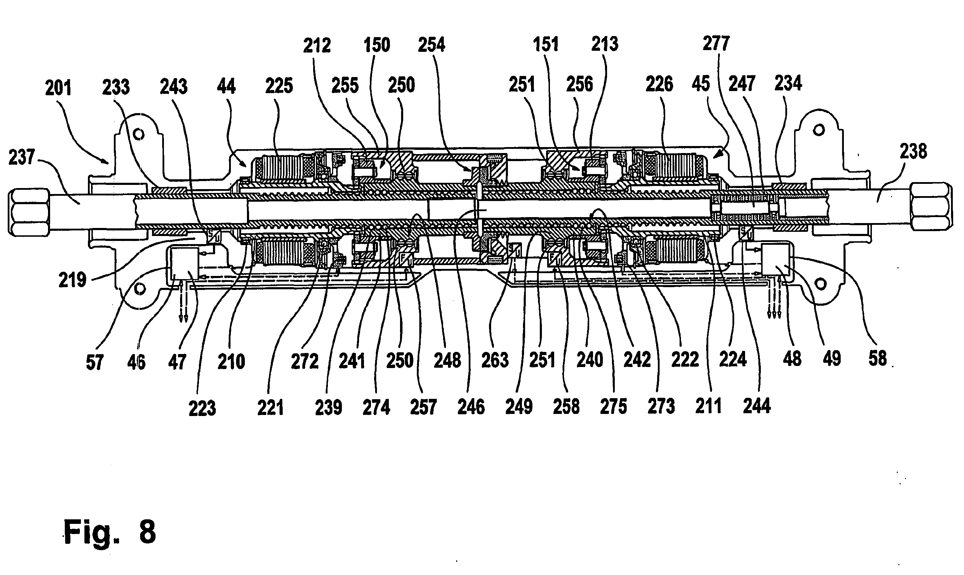

- Fig.8: einen Schnitt durch ein erfindungsgemäßes Achslenkmodul mit einer geteilten Lenkstange, mit Kugelgewindetrieben und mit Planetenradgetrieben

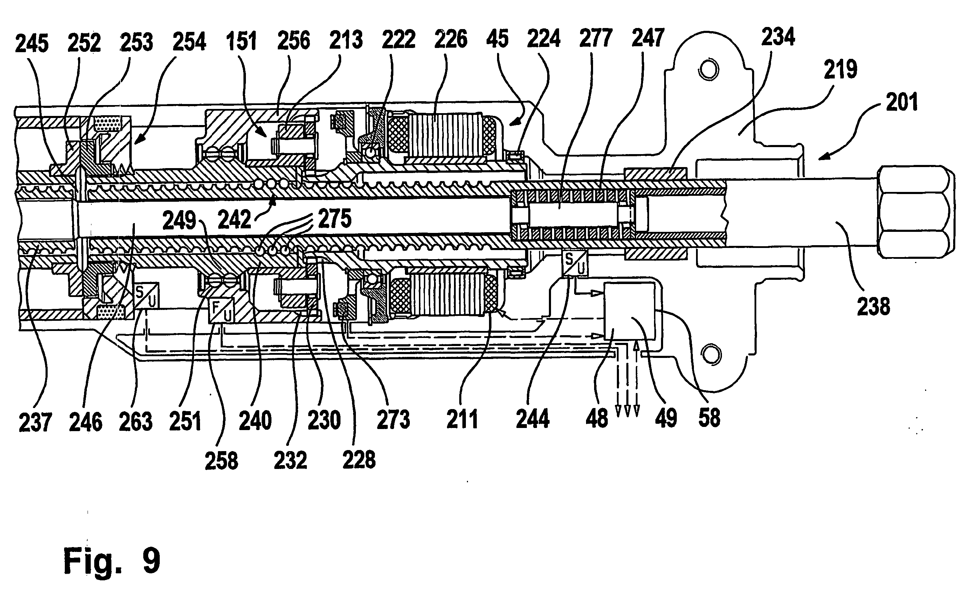

- Fig.9: einen Ausschnitt aus dem in Fig.8 gezeigten Schnitt durch das erfindungsgemäße Achslenkmodul in vergrößerter Darstellung

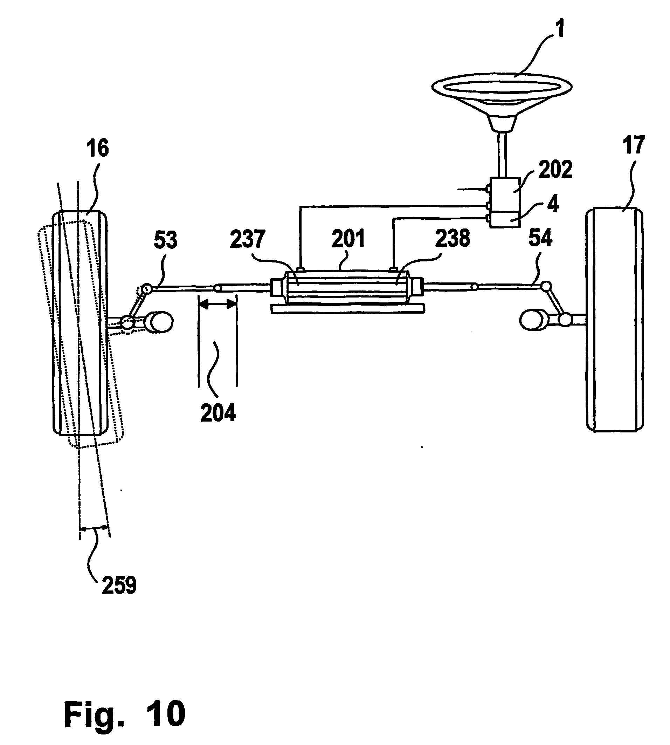

- Fig.10: die erfindungsgemäße Fahrzeuglenkung mit einem Achslenkmodule mit zwei Stellaggregaten für eine radindividuelle Radeinstellung

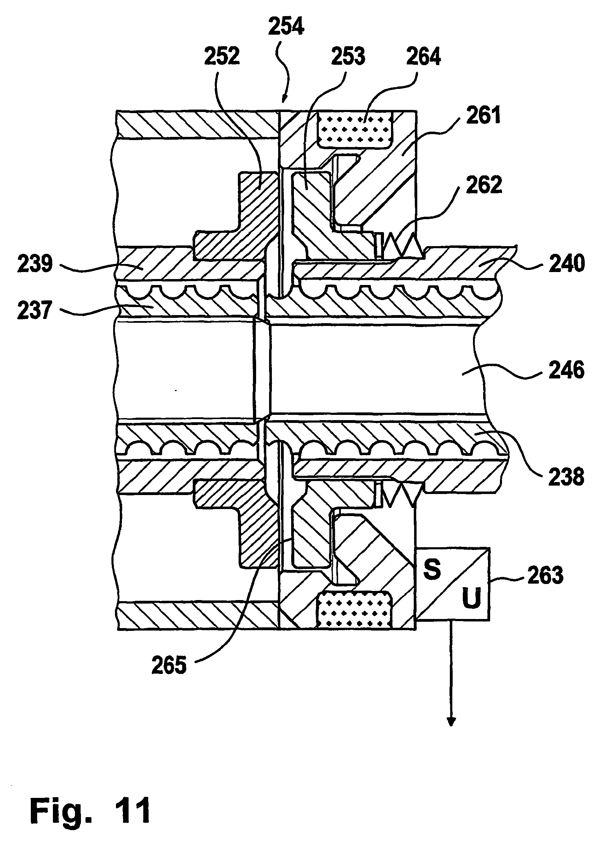

- Fig.11: die in Fig.9 und Fig.10 gezeigte Kupplung zwischen dem rechten und linken Stellaggregat in vergrößerter Darstellung

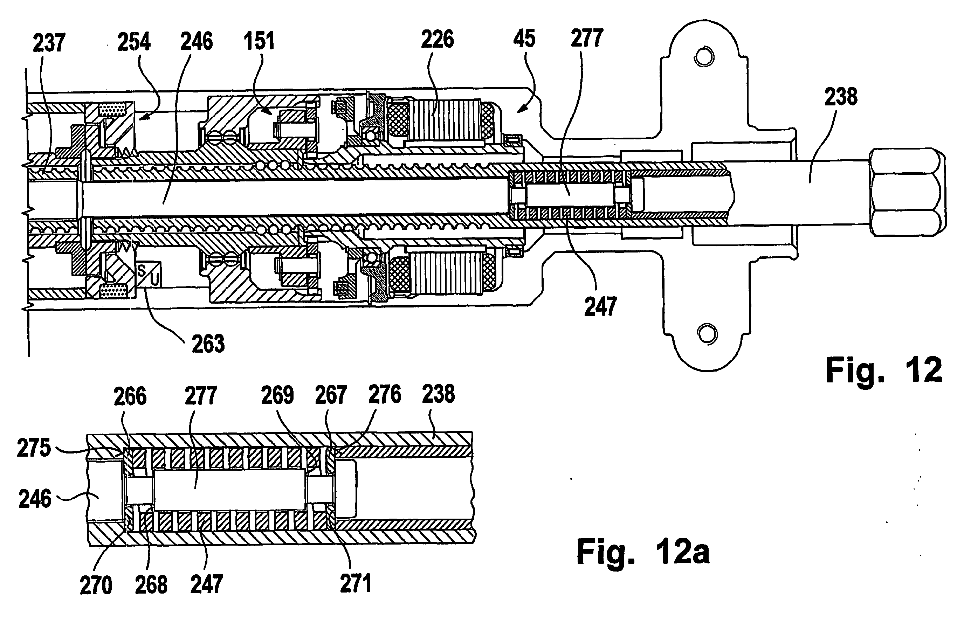

- Fig.12: das in Fig.9 und Fig. 10 gezeigte Achslenkmodul in einer ersten Stellung
- Fig.12a: das in Fig.12 gezeigte Achslenkmodul in einer vergrößerten Darstellung

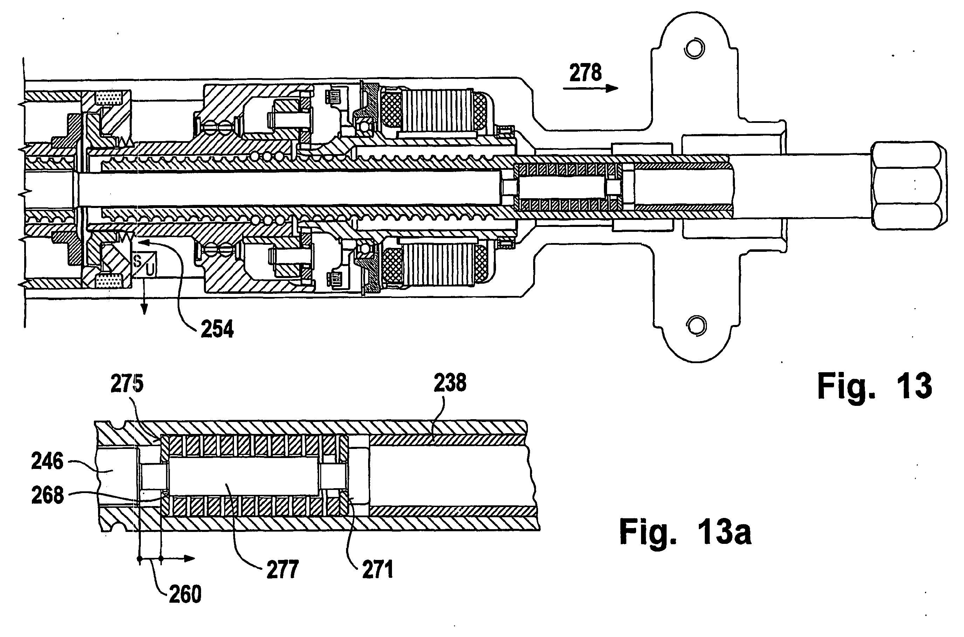

- Fig.13: das in Fig.9 und Fig. 10 gezeigte Achslenkmodul in einer zweiten Stellung
- Fig.13a: das in Fig.13 gezeigte Achslenkmodul in einer vergrößerten Darstellung

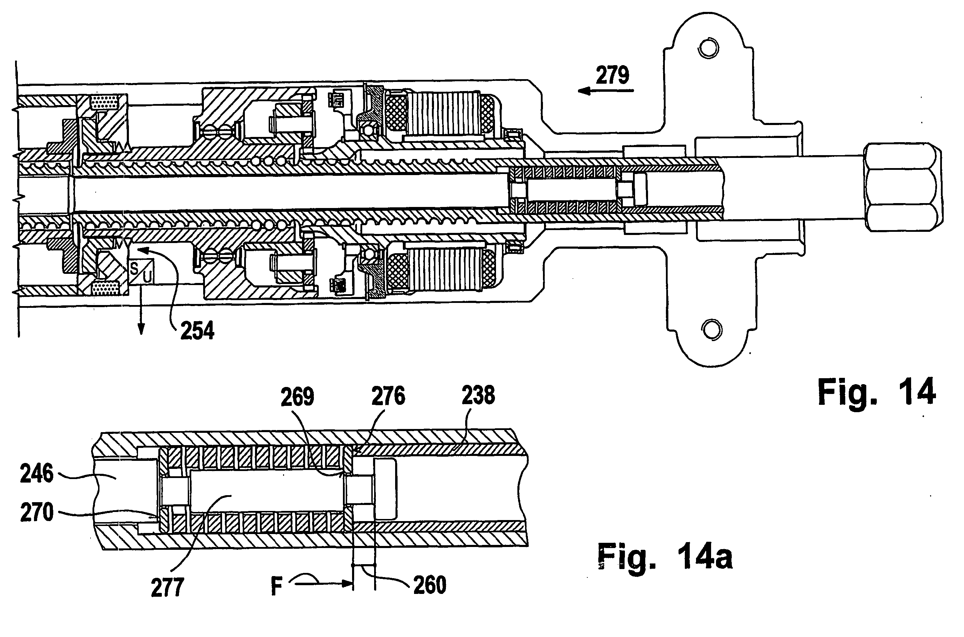

- Fig.14: das in Fig.9 und Fig. 10 gezeigte Achslenkmodul in einer dritten Stellung
- Fig.14a: das in Fig.14 gezeigte Achslenkmodul in einer vergrößerten Darstellung

In der Fig. 4 ist die erfindungsgemäße Fahrzeuglenkung mit einem Achslenkmodul 201 dargestellt, worin zwei Stellaggregate 12,13 angeordnet sind, die durch die Zentralsteuereinheit 4 angesteuert werden. Durch eine Verstellung einer Lenkstange 203 um einen bestimmten Verstellweg 204 wird ein bestimmter Lenkwinkel 205 eingestellt.

Ein Achslenkmodul 201 mit zwei Stellaggregaten 12,13 und einer durchgehenden Lenkstange sind in Fig.5 und der Fig.6 in einem Querschnitt dargestellt.

Die Stellaggregate 12,13 weisen zwei konzentrisch um die Lenkstange 203 angeordnete Elektromotoren 44,45 auf. Durch die zwei Elektromotoren 44,45 wird das redundante Antriebskonzept realisiert. Die beiden Elektromotoren 44,45 treiben über Übertragungseinheiten, hier vorzugsweise zwei Planetenradgetriebe 50,51 über eine zentrisch sitzende Mutter 206, einen Kugelgewindetrieb 207 und die zumindest im Bereich der Getriebe bzw. Elektromotormodule als Kugelgewindestange ausgebildet Lenkstange 203 an. Die Lenkstange 203 ist hier durchgehend ausgeführt, wodurch die Räder 16,17 kinematisch direkt miteinander gekoppelt sind. Es können auch andere Getriebebauformen für die Obertragungseinheiten verwendet werden, die geeignet sind, das Antriebsmoment in eine Stellkraft und eine Lenkbewegung der über die zwei Spurstangen 53,54 gekoppelten Räder 16,17 umzusetzen. Ebenso ist es im Sinne der Erfindung möglich, die Getriebe 50,51 durch zwei Kupplungen als Übertragungseinheiten zu ersetzen.

Der Lenkstangenweg 204 wird redundant durch zwei redundante Wegsensoren 208,209 erfasst. Nach einer Plausibilitätsabfrage wird nach Maßgabe des erfassten Wegs der Lenkstange 203 (Istwert) durch die Zentralsteuereinheit 4 ein Sollwert für den einzustellenden Lenkwinkel (Sollwert) ermittelt. Die Zentralsteuereinheit 4 ist vorzugsweise im Bereich des Handlenkrads 1 angeordnet (siehe Fig. 4). Alternativ kann die Zentralsteuereinheit 4 auch vorteilhaft in das Achslenkmodul 1 integriert werden. Ist der geforderte Sollwert, das bedeutet der einzustellende Lenkwinkel 205 der Räder 16,17 erreicht, stellt sich je nach den einwirkenden Spurstangenkräften ein radstabiles Haltemoment an den Elektromotoren 44,45 ein.

Bei der oben beschriebenen Funktionsweise sind zwei den Elektromotoren 44,45 zugeordnete Rotoren 210,211 über die beiden Planetenradgetriebe 50,51 mit der Gewindemutter 206 des Kugelgewindetriebes 207 spielfrei und formschlüssig rotatorisch miteinander gekoppelt. Das bedeutet, in der oben beschriebenen Funktionsweise sind auch beide Elektromotoren 44,45 miteinander verbunden und können parallel die Lenkstange 203 antreiben (Normallenkfunktion).

Im Fehlerfall, wenn ein Elektromotor 44 oder 45 ausfällt, übernimmt der noch funktionstüchtige Elektromotor den Antrieb. Dazu sind auch die Elektronikeinheiten 46-49 der Stellaggregate 12,13, welche die Elektromotoren 44,45 über Elektromotoransteuerungen 272,273 steuern, redundant ausgeführt. Durch den einen noch funktionstüchtigen Elektromotor kann so der Kugelgewindetrieb 207 über die Kugeln 274 die Stellbewegung der Lenkstange 203 durchführen. Die Baugruppen des defekten Stellaggregats werden dann rein mechanisch durch die mechanische Kopplung über die Gewindemutter 206 und den Kugelgewindetrieb 207 mitgeschleppt

Daraus ergibt sich als ein wesentlicher Vorteil des erfindungsgemäßen Achslenkmoduls 201 und der efindungemäßen Fahrzeuglenkung, dass bei Ausfall eines Elektromotors, z.B. Elektromotor 44, beispielsweise durch den Ausfall der elektrischen Energieversorgung oder dem Ausfall einer elektronischen Baugruppe der Zentralsteuereinheit 4 oder des Stellaggregats selbst, bei einem Lenkungswunsch des Fahrers das noch funktionstüchtige Stellaggregat mit dem anderen, funktionstüchtigen Elektromotor, in diesem Beispiel der Elektromotor 45, in Verbindung mit der redundant ausgeführten Elektromotorsteuerung die gesamte Lenkfunktion des Achslenkmoduls 201 übernimmt. Ein weiterer Vorteil ist dadurch gegeben, dass durch die angetriebene Mutter 206 des Kugelgewindetrieb 207 die beiden Räder über die Lenkstange 203 spielfrei direkt miteinander verbunden sind. Der Kraftfluss geht so direkt über die Lenkstange 203 und über die Spurstangen 53,54 zu den Rädern 16,17. Somit sind auch die beiden Räder 16,17 spielfrei miteinander verbunden.

Als Aufnahme der Gewindemutter 206 des Kugelgewindetriebs 207 und als Aufnahme von Planetenträgern 212,213 der Planetenradgetriebe 44,45 oder im Fall der Ausführungsform mit einer Kupplung (siehe Fig.7) als Aufnahme für die Kupplung ist ein Innenring 214 eines Axial-Schrägkugellagers 215 vorgesehen. Damit bildet das Axial-Schrägkugellager als Aufnahme für die Gewindemutter 206 und die Planetenträger 212,213 oder Kupplung (siehe Fig.7) eine funktionelle Baugruppe mit dem Kugelgewindetrieb 207 und den Getrieben 44,45. Das Axial-Schrägkugellager 215 nimmt dabei die entstehenden Stellkraft der Lenkstange 203 auf und leitet sie über einen Außenring 218 des Axial-Schrägkugellagers 215 in das Gehäuse 219 des Achslenkmoduls 201 ein.

In dem Außenring 218 des Axial-Schrägkugellagers 215 kann zumindest ein Kraftsensor 220 zur Erfassung der wirkenden Stellkräfte angeordnet sein. Nach Maßgabe der hier gemessen Kräfte kann dem Fahrer über den zweiten elektromechanischen Betätigungskraftsimulator 8 eine bestimmte Handkraft an dem Lenkhandrad 1 eingestellt werden (Rückkopplung der Kräfte). Gleichzeitig kann der Kraftsensor 220 für eine Plausibilitätsprüfung und Systemprüfung genutzt werden.

Die Rotoren 210,211 sind vorzugsweise über Festlager 221,222 und Loslager 223,224 im Gehäuse 219 gelagert. Dadurch kann eine querkraftfreie Lagerung der Rotoren 210,211 erzielt werden. Auch den Elektromotoren 44,45 zugeordnete Statoren 225,226 werden im Gehäuse 219 gehalten. Es kann ferner dadurch ein geringer Luftspalt zwischen den Rotoren 210,211 und den Statoren 225,226 realisiert werden, was einen positiven Einfluss auf den Gesamtwirkungsgrad hat. Gleichzeitig sind Sonnenräder 227,228 der Planetenradgetriebe 50,51 als Bauteile der Rotoren 210,211 ausgeführt. Die Sonnenräder 227,228 treiben über Planetenräder 229,230 die Planetenträger 212,213 an. Die Sonnenräder 227,228 stützen sich gegen Hohlräder 231,232 ab, die im Außenring 218 des Axiai-Schrägkugellagers 215 integriert sind. Das Antriebsmoment der Kugelgewindetriebe 207 und im Anschluss der Lenkstange 203 wird über zwei in das Gehäuse 219 integrierte Verdrehsicherungen 233, 234 vorgenommen, wobei die Verdrehsicherungen 233,234 auch eine Linearlagerfunktion der Lenkstange 203 übernehmen. Vorzugsweise kann auch einseitig eine Verdrehsicherung 233 oder 234 entfallen.

In der Fig. 7 ist eine Ausführungsfonn des in Fig.5 und Fig.6 gezeigten Achslenkmoduls 201 dargestellt, bei der die Getriebe 50,51 durch Kupplungen 235,236 als Übertragungselemente ersetzt worden sind. Das bedeutet, die Spurstangen werden hier direkt über die zwei Kupplungen 235,236 angetrieben (Direktantrieb). Dieser "Direktantrieb" ist insbesondere für relativ leichte, kleinere Fahrzeuge mit geringen Vorderachslasten vorgesehen, bei denen nur relativ geringe Stellkräfte zum Lenken der Räder nötig sind. Vorteilhaft kann so der konstruktive Aufwand verringert werden, was grundsätzlich zu einer größeren Zuverlässigkeit und zu geringeren Gestehungskosten führt.

Bei dem oben gezeigten Achslenkmodul 201 ist die Lenkstange 203 nicht geteilt, wodurch die Räder 16,17 durch die Spurstangen 112,113 direkt gekoppelt sind. Im Sinne der Erfindung ist es aber ebenso vorgesehen, ein elektromechanisches Achslenkmodul 201 mit vorzugsweise elektromechanisch zumindest teilentkoppelten Spurstangen 112,113 vorzusehen, um eine einseitige Lenkwinkelverstellung, beispielsweise für einen fahrdynamischen Regelungseingriff, zu ermöglichen.

Ein Beispiel für eine bevorzugte Ausführungsform eines Achsienkmoduls für teilentkoppelte Spurstangen 112,113 ist in der Fig. 8 und Fig. 9 gezeigt.

Das Achslenkmodul 201 weist zwei konzentrisch um die beiden Lenkstangen 237,238 angeordneten Elektromotoren 44,45 auf. Die Lenkstangen 237,238 sind als Kugelgewindestangen ausgebildet. Durch die beiden Elektromotoren 44,45 wird ein redundantes Antriebskonzept realisiert. Die beiden Elektromotoren 44,45 treiben über zwei Planetenradgetriebe 50,51 zwei Muttern 239,240 von zwei Kugelgewindetrieben 241,242 an und setzen das Antriebsmoment in eine Stellkraft und eine Lenkbewegung der über die beiden Spurstangen 53,54 gekoppelten Räder 16,17 um.

Es ist jeweils ein redundanter Wegsensor 243,244 an jeweils einem Stellaggregat 12,13 angeordnet, zum Erfassen der Lenkstangenwege der beiden Lenkstangen 237,238. Nach Maßgabe der ermittelten Lenkstangenwege wird durch die Zentralsteuereinheit 4 ein Sollwert für die Regelung des Lenkwinkels 205 und des zweiten Betäbgungskraftsimulators 8 gebildet. Die Zentralsteuereinheit 4 kann im Bereich des Lenkhandrades 1 oder aber innerhalb des Achslenkmoduls 201 integriert sein. Ist der geforderte Sollwert, das bedeutet ist der Lenkwinkel 205 der Räder 16,17 erreicht, so stellt sich je nach den einwirkenden Spurstangenkräften ein radstabiles Haltemoment an den Elektromotoren 44,45 ein.

Die Lenkstangen 237,238 weisen vorzugsweise einen in der Mitte des Achslenkmoduls 201 liegenden Trennbereich 245 auf. Die Lenkstangen 237,238 sind durch einen Koppelstab 246 gekoppelt, der fest mit einer der beiden Lenkstangen (hier die Lenkstange 237) und teilelastisch Ober eine vorgespannte und wegbegrenzte Druckfeder 247 innerhalb der anderen Lenkstange (hier die Lenkstange 238) angeordnet ist. Die andere Lenkstange 238 ist daher zumindest im Abschnitt der Bewegungsmöglichkeit des Koppelstabs 246 als ein Hohlzylinder ausgeführt. Die beiden Lenkstangen 237,238 wirken unterhalb der eingestellten Federvorspannung, in Bewegungsrichtung des Lenkstangenwegs 204 (translatorisch) wie eine einzige, starre durchgehende Lenkstange.

Die beiden Gewindemuttem 239,240 der beiden Kugelgewindetriebe 241,242 sind über zwei Innenringe 248,249 von zwei Axial-Schrägkugellagern 250,251 und zwei Kupplungsscheiben 252,253 einer stromlos geschlossenen elektromechanischen Kupplung.254 spielfrei und formschlüssig rotatorisch miteinander gekoppelt. In der Normallenkfunktion sind beide Elektromotoren 44,45 über die Kupplung 254 miteinander verbunden und können somit parallel die Lenkstangen 237,238 antreiben. Im Fehlerfall, das bedeutet bei Ausfall eines Elektromotors 44,45, übernimmt der intakte Elektromotor durch die redundant ausgeführte Elektromotoransteuerung die gesamte Stellbewegung der beiden Lenkstangen 237,238 (redundantes Antriebskonzept). Das defekte Stellaggregat 12,13 wird dann rein mechanisch mitgeschleppt.

Vorzugsweise sind die Innenringe 248,249 der Axial-Schrägkugellager 250,251 als Aufnahme der Gewindemuttern 239,240, als Aufnahme der beiden Planetenträger 212,216 und als Aufnahme der beiden Kupplungsscheiben 252,253 ausgebildet und bilden zusammen eine funktionelle Baugruppe. Die Axial-Schrägkugellager 250,251 nehmen dabei die entstehenden Stellkräfte der Lenkstangen 237,238 auf und leiten sie über zwei Außenringe 255,256 der beiden Axial-Schrägkugellager 250,251 in das Gehäuse 219 ein. In die Außenringe 255,256 können zwei Kraftsensoren 357,358 zur Erfassung der Stellkräfte und zur Rückkopplung der wirkenden Stellkräfte an den zweite Betätigungskraftsimulator 8 integriert werden. Gleichzeitig können die Kraftsensoren 357,358 für Plausibilitätsprüfungen und Systemprüfungen genutzt werden.

Bei den Planetengetrieben 50,51 sind Rotoren 210,211 über Festlager 221,222 und die Loslager 223,224 im dem Gehäuse 219 querkraftfrei gelagert, welches gleichzeitig die Aufnahme der Statoren 225,226 über nimmt. Ein geringer Luftspalt zwischen Rotor und Stator wird so realisiert, was einen positiven Einfluss auf den Gesamiwirkungsgrad hat. Gleichzeitig sind Sonnenräder 227,228 der Planetenradgetriebe 50,51 Bestandteil der Rotoren 210,211 und treiben Planetenträger 212,213 durch Planetenräder 229,230 an die sich an in die Außenringe 139,140 der Axial-Schrägkugellager250,251 integrierte Hohlräder 231,232 abstützen. Die Abstützung des entstehenden Antriebsmomentes an den spindelförmigen Bereichen der Lenkstangen 237,238 wird über die beiden in das Gehäuse 219 integrierten Verdrehsicherungen 233,234 vorgenommen, die ebenso auch einen Linearfagerfunktion der Lenkstangen 237,238 erfüllen.

Für beispielsweise einen dynamischen Lenkungseingriff können aufgrund der im Grundsatz unabhängig betätigbaren Lenkstangen 237,238 eine einseitige, vom jeweils anderen Rad unabhängige Lenkwinkelverstellung durchgeführt werden, was in der Fig. 10 dargestellt ist. Hier ist das linke Rad 16 um einen Differenzwinkel 259 gegenüber dem rechten Rad 17 verschwenkt.

Es ist ebenso denkbar, anstatt der in Fig. 11 gezeigten rotierenden Mutter 239,240 des Kugelgewindetriebes rotierende Kugelgewindetrieb-Stangen vorzusehen (nicht dargestellt), wobei die Kraftübertragung dann über beispielsweise ein Planetengetriebe 150,151 und dazwischen angeordnete Gelenkwellen auf die mit den Spurstagen 53,54 verbundene Kugelgewindetrieb-Stangen erfolgt. Dann kann auch das Gehäuse zweigeteilt sein, so dass jedes Stellaggregat 12,13 einem Gehäuseteil zugeordnet ist. Vorzugsweise sind die beiden Stellaggregate durch eine Kupplung 52 verbunden, die eine zumindest in einem bestimmten Rahmen radindividuelle Einstellung der Räder 16,17 ermöglicht.

Die elektromechanische Kupplung 254 ist in Fig. 11 näher dargestellt. Die Kupplung 254 ist vorgesehen, um die beiden Lenkstangen 237,238 bezogen auf ihre lineare Bewegungsmöglichkeit voneinander zu entkoppeln und so eine einseitige Lenkwinkelverstellung eines Rades zu realisieren. Diese erfolgt über das Öffnen, das bedeutet Bestromen der elektromechanischen Kupplung 254. Ist die Kupplung 254 geöffnet, so werden die beiden Muttern 239,240 rotatorisch voneinander getrennt und jeder Elektromotor 44,45 kann eine geforderte Lenkmdnkeidifferenz 359 im zulässig mechanisch begrenzten Stellbereich 260 einstellen, wobei die Einstellung nach Maßgabe der durch die Kraft- und redundanten Wegsensoren ermittelten Werte erfolgt. Die Kupplung 254 weist neben den Kupplungsscheiben 252,253, einen Polkörper 261, eine Druckfeder 262, einen Kupplungssensor 263 und eine Spule 264 auf. Die beiden Kupplungsscheiben 252,253 können zu einer sicheren und hohen Momentenübertragung vorzugsweise an ihrer Kupplungsfläche 265 formschlüssig miteinander gekoppelt werden. Desweiteren kann die Kupplungsfäche 265 durch eine bestimmte Formgebung so ausgebildet werden, dass sie nur in einer Position verriegelt, vorzugsweise in einer Normalstellung der beiden Lenkstangen 237,238. Wird die Spule 264 des mit dem Gehäuse 219 fest verbundenen Pols 261 bestromt, so wird eine Kupplungsscheibe 253 gegen die Druckfeder 262 angezogen und gibt die Kupplung 254 frei. Der Entkuppel- und Einkuppelvorgang wir durch den Kupplungssensor 263 sensiert und überwacht. Die Kupplungsscheibe 252 ist als ein Anker ausgebildet und kann sich auf dem Innenring 248 des einen Axial-Schrägkugellagers 250 axial verschieben. Die Momentenübertragung erfolgt durch Formgebung zwischen Kupplungsscheibe 252 und Innenring 248 des Axial-Schrägkugellagers 250. Ist eine Lenkungsregelung einer Lenkwinkeldifferenz beendet, so werden durch beide Elektromotoren 44,45 die Lenkstangen 237,238 in ihre Normal- oder Ausgangsstellung zurückbewegt, der Spulenstrom fällt ab und die beiden Kupplungsscheiben 252,253 werden durch die Druckfeder 262 in ihrer Normal- oder Ausgangsstellung verriegelt. Dieser Einkuppelvorgang wird durch den Kupplungssensor 263 sensiert. Die weitere Regelung des Lenkwinkels 205 erfolgt nun dann über die Normallenkfunktion.

Die Funktionsweise des in der Fig. 8 und 9 gezeigten Achslenkmoduls ist in der Fig.12 bis Fig.14 näher gezeigt. Fällt ein Motormodul aus, so werden durch das Sicherheitskonzept die beiden Lenkstangen 237,238 der Räder 16,17 mechanisch durch die unterstützend wirkende Federkraft 272 in ihre Ausgangslage zurückgestellt und die beiden Gewindemuttem 239,240 werden durch die vorzugsweise formschlüssig ausgebildete Kupplung 254 in ihrer Normalstellung verriegelt (siehe Fig.12 und Fig.12a). Die Druckfeder 247 weist eine maximale Länge auf und stützt sich durch die beiden Mitnehmerscheiben 266,267 auf die zwei äußeren Anschläge der Koppelstange 270,271 und die beiden Anschläge der Hohlwelle 275,276 ab. Das intakte Stellaggregat übernimmt nun die Normallenkfunktion mit dem funktionsfähigen Elektromotor.

Der unabhängige Verstellbereich der Lenkstangen wird im Grundsatz durch die Ausbildung und Konstruktion der zwei Lenkstangen 237,238 verbindenden Bauteile, insbesondere den Koppelstab 246 und die Druckfeder 247 und deren benachbarte Bauteile, vorgegeben (siehe Fig.13 bis Fig. 14a). Der zulässig mechanische Verstellbereich 260 der beiden Lenkstangen 237,238 während der Lenkwinkeldifferenzregelung wird durch die integrierte, gefesselte und vorgespannte Druckfeder 247 in Verbindung mit zwei Mitnehmemcheiben und über innere 268,269 und äußere 170,271 Anschläge des Koppelstabes und Anschläge 275,276 der Lenkstangen-Hohlwelle 238 realisiert. Über diese Begrenzung kann die Lenkwinkeldifferenz rein mechanisch nicht verstellt werden, das bedeutet die beiden Räder 16,17 sind oberhalb dieses Bereiches starr miteinander gekoppelt (Sicherheitskonzept). Bei der Lenkwinkeldifferenzreglung werden die beiden Lenkstangen 237,238 gegeneinander verschoben, wobei die Druckfeder 247 durch den Koppelstab 246 bzw. dessen Endstück 277 und zwei Mitnehmerscheiben 266,267 bis auf mechanische Anschläge 270,271 weiter vorgespannt werden kann. Diese Funktion ist durch die äußere Fesselung der Druckfeder 247 in der Lenkstange 238 und die innere Fesselung der Druckfeder 247 durch den Koppelstab 246 in beiden Richtungen gewährleistet. Die mechanische Begrenzung der Lenkwinkeldifferenz wird durch eine erste (siehe Fig. 13,13a) und eine zweite (sieh Fig.14,14a) Endstellung erreicht.

Wird die in Fig.12,12a gezeigte Lenkstange 238 nach rechts bewegt (in Pfeilrichtung 278) und die Lenkstange 246 nicht bewegt, dann wird durch den ersten Anschlag 275 der Hohlwelle 238 die linke Mitnehmerscheibe 266 nach rechts verschoben und die Feder, die auf ihrer rechten Seite über die rechte Mitnehmerscheibe 267 durch den zweiten äußeren Anschlag 271 des ortsfesten Endstücks 277 der Koppelstange 246 ortsfest gehalten wird, wird entgegen der Federkraft gespannt, bis die in Fig. 13,13a gezeigte erste Endstellung erreicht ist. Bei der ersten Endstellung (Fig.13,13a) weist die Druckfeder 247 eine minimale Länge auf und stützt sich durch die beiden Mitnehmerscheiben 266,267 einerseits auf den ersten Anschlag 275 der Hohlwelle 238 und anderseits auf den zweiten äußeren Anschlag 271 des Endstücks 277 der Koppelstange 246 ab.

Wird die in Fig.12,12a gezeigte Lenkstange 238 nach links bewegt (in Pfeilrichtung 279) und die Lenkstange 246 dabei nicht bewegt, dann wird durch den zweiten Anschlag 276 der Hohlwelle 238 die rechte Mitnehmerscheibe 267 nach links verschoben und die Feder 247, die auf ihrer linken Seite über die linke Mitnehmerscheibe 266 durch den ersten äußeren Anschlag 270 des ortsfesten Endstücks 277 der Koppelstange 246 ortsfest gehalten wird, wird entgegen der Federkraft gespannt, bis die in Fig. 14,14a gezeigte zweite Endstellung erreicht ist Bei der zweiten Endstellung (Fig. 14,14a) weist die Druckfeder 247 ebenfalls die minimale Länge auf und stützt sich durch die beiden Mitnehmerscheiben 266,267 einerseits auf einen zweiten Anschlag der Hohlwelle 276 und anderseits auf einen ersten äußeren Anschlag 270 des Endstücks 277 der Koppelstange 246 ab. Das bedeutet, für die Lenkwinkeldifferenzregelung muss durch eine vorhandene und anwachsende Federkraft durch die Druckfeder 247 ein Zusatzmotormoment der Elektromotoren 44,45 aufgebracht werden.

Diese Ausführungsform weist insbesondere den Vorteil auf, dass die Gewindemuttem 239,240 der Kugelgewindetriebe 241,242 direkt angetrieben werden können und somit die beiden Räder 16,17 über den in den Lenkstangen 237,238 integrierten Koppelstab 246 und die integrierte vorgespannte Druckfeder 247 spielfrei miteinander verbunden werden. Das bedeutet, unterhalb der Federvorspannung sind die beiden Lenkstangen 237,238 als funktional als einteilig anzusehen. Ferner weist dieses System ein sicheres Kupplungskonzept für die Lenkwinkeldifferenzregtung auf durch eine formschlüssig in einer Position verriegelten Kupplung 254, einen mechanisch begrenzten Verstellbereich 260 und einer vorgespannten, mit dem Koppelstab 246 wirkenden Druckfeder 247.

In der Fig. 15 ist ein Achslenkmodul dargestellt, das zwei Lenkstangen 237,238 aufweist, die über zwei Stellaggregate 12,13 einstellbar sind. Gegenüber zuvor dargestellten Ausführungsformen, bei denen die beiden Stellaggregate 12,13 in einem gemeinsamen Gehäuse 219 angeordnet waren, sind hier die beiden Stellaggregate in jeweils einem Gehäuse 280,281 angeordnet und über eine Kupplung 282 miteinander verbunden.

### Bezugszeichenliste

- 1: Lenkhandrad
- 2,3: redundante Sensoren am Lenkhandrad
- 4: Zentralsteuereinheit
- 5,6: Datenübertragungsleitungen von den Sensoren am Lenkhandrad
- 7: passiver Betäügungskraftsimulator
- 8: elektromechanischer Betätigungskraftsimulator
- 9: Datenübertragungsleitung zum elektromechanischen Betätigungskraftsimulator
- 10: Fahrzeuggeschwindigkelts-Erfassungseinrichtung
- 11: Datenübertragungsleitung zur Zentralsteuereinheit
- 12,13: Stellaggregate
- 14,15: Datenübertmgungsleitungen zu den Stellaggregaten
- 16,17: lenkbare Räder
- 18: lenkbare Achse
- 19,20: redundante Wegsensoren der Stellaggregate
- 21,22: Datenübertragungsleitungen von den Stellaggregaten
- 30,31: A/D-Wandler der Sensoren am Lenkhandrad
- 32,33: Ausgang A/D-Wandler der Sensoren am Lenkhandrad
- 34,35: Bussystem des Lenkungsystems
- 36: Fahrzeugbussystem (CAN)
- 37: Motor elektromechanischer Betätigungskraftsimulator
- 38: Getriebe elektromechanischer Betätigungskraftsimulator
- 39: Achse Lenkhandrad
- 40,41: Rechner Zentralsteuereinheit
- 42: Schalter elektromechanischer Betätigungskraftsimulator
- 43: erste elektrische Energiequelle
- 44,45: Motoren der Stellaggregate
- 46-49: Rechner der Stellaggregate
- 50,51: Getriebeeinheiten der Stellaggregate
- 52: Kupplung der Stellaggregate
- 53,54: Spurstangen
- 55,56: Ein- und Ausgänge der Stellaggregate
- 57,58: Elektronische Einheiten der Stellaggregate
- 59: Ein- und Ausgang zum Fahrzeugbussystem (CAN)
- 60: zweite elektrische Energiequelle
- 61,62: elektronische Baueinheiten der elektrischen Energiequellen
- 63,64: Eingänge und Ausgänge der elektrischen Energiequellen
- 65,66: Fahrzeugbatterien
- 67,68: Leitungen zur Stromversorgung der Komponenten
- 69,70: Schalter der Stellaggregate
- 71: Fahrzeuggenerator
- 80: Zentralsteuer- und regelungseinheit (Zentraleinheit)
- 81-84: Radbremsmodule
- 85-88: Aktuatoren der Radbremsmodule
- 89-92: Getriebe der Radbremsmodule
- 93-100: Rechner der Radbremsmodule
- 101-104: Ein- und Ausgänge der Radbremsmodule
- 105,106: Brems- und Lenkungs-Bussysteme
- 107: Bremsbetätigungseinrichtung
- 108: Bremspedal
- 109: Betätigungswegsimulator der Bremsbetätigungseinrichtung
- 110.111: Sensoren der Bremsbetätigungseinrichtung
- 112,113: Ausgänge der Sensoren der Bremsbetätigungseinrichtung
- 114,115: Zentralrechner der Zentralsteuer- und regelungseinheit (Zentraleinheit)
- 116: Feststellbremsenbetätigungseinrichtung
- 117,118: Leitungen zur Stromversorgung der Komponenten
- 119: zentraler Fahrzeugrechner
- 150,151: Rot/Rot-Getriebe der Stellaggregate
- 201: Achslenkmodul
- 202: Betätigungskraftsimulator (Lenksimulator)
- 203: Lenkstange
- 204: Lenkstangenweg
- 205: Lenkwinkel
- 206: Mutter Kugelgewindetrieb
- 207: Kugelgewindetrieb
- 208,209: Wegsensoren Lenkstange
- 210,211: Rotoren der Motoren
- 212,213: Planetenträger
- 214: Innenring
- 215: Axial-Schrägkugellager
- 218: Außenring
- 219: Gehäuse
- 220: Kraftsensor
- 221,222: Festlager
- 223,224: Loslager
- 225,226: Statoren
- 227,228: Sonnenräder
- 229,230: Planetenräder
- 231,232: Hohlräder
- 233,234: Verdrehsicherungen
- 235,236: Kupplungen
- 237,238: Lenkstangen
- 239,240: Muttern Kugelgewindetriebe
- 241,242: Kugelgewindetriebe
- 243,244: Wegsensoren
- 245: Trennungsbereich der Lenkstangen
- 246: Koppelstab
- 247: Druckfeder Koppelstab
- 248,249: Innenringe Axial-Schrägkugellager
- 250,251: Axial-Schrägkugellager
- 252,253: Kupplungsscheiben
- 254: elektromechanischen Kupplung
- 255,256: Außenringe Axial-Schrägkugellager
- 257,258: Kraftsensoren
- 259: Lenkwinketdifferenz
- 260: mechanisch begrenzter Stellbereich
- 261: Polkörper
- 262: Druckfeder elektromechanischen Kupplung
- 263: Kupplungssensor
- 264: Spule
- 265: Kupplungsfläche
- 266,267: Mitnehmerscheiben
- 268,269: innere Anschläge Koppelstab
- 270,771: äußere Anschläge Koppelstab
- 272,273: Motoransteuerung
- 274: Kugeln Kugelgewindeantrieb
- 275,276: mechanischen Anschläge Lenkstangen-Hohlwelle
- 277: Endstück Koppelstab
- 278,279: Bewegungsrichtung Lenkstange
- 280,281: Gehäuse Stellaggregate
- 282: Kupplung zwischen Stellaggregaten

## Patentansprüche

1. Fahrzeuglenkung,
mit einer vom Fahrer betätigbaren Lenkbetätigungseinrichtung, insbesondere Lenkhandrad (1), mit mindestens einem Betätigungskraftsimulator (7), mit jeweils einem elektromechanischen Stellaggregat (12,13) zum Steuern jeweils eines rechts und links an einem Fahrzeugkörper befindlichen lenkbaren Rades (16,17) eines Radpaares einer lenkbarer Fahrzeugachse (18), mit Mitteln, die bei einem Ausfall oder einer Störung eines der beiden einer lenkbaren Fahrzeugachse (18) zugeordneten Stellaggregate (12,13) durch das jeweils andere, noch funktionstüchtige Stellaggregat die Steuerung der beiden Fahrzeugräder (16,17) dieser Fahrzeugachse (18) sicherstellen, **dadurch gekennzeichnet, daß** die Fahrzeuglenkung, mit mindestens einem von der Lenkbetätigungseinrichtung (1) betätigbaren Sollwertgeber (2,3) für einen einzustellenden Lenkwinkel (205), mit mindestens einem den Lenkwinkel (205) der Fahrzeugräder (16,17) registrierenden Istwertgeber (19,20), mit einer Zentralsteuereinheit (4), die in Abhängigkeit von einem Vergleich eines Signals des Istwertgebers (19,20) (Istwert) mit einem Signal des Sollwertgebers (2,3) (Sollwert) die elektromechanischen Stellaggregate (12,13) steuert, und mit einer Datenübertragungseinheit ausgerüstet ist, die eine Datenverbindung (14,15,21,22) zwischen der Zentralsteuereinheit (4) und den elektromechanischen Stellaggregaten (12,13) herstellt,
wobei die Zentralsteuereinheit (4) "fail-silent" ausgebildet ist und eine redundante Rechnereinheit (40, 41) aufweist und wobei die Stellaggregate (12, 13) "fail-silent" ausgebildet sind und zumindest jeweils einen elektromechanischen Aktor (44,45) und jeweils eine
redundante elektronische Baueinheit (46-49)aufweisen.

2. Fahrzeuglenkung nach Anspruch 1,
**dadurch gekennzeichnet, dass** jedes elektromechanische Stellaggregat (12,13) jeweils von einer unabhängigen Energieversorgungsquelle (60) versorgt wird.

3. Fahrzeuglenkung nach Anspruch 1 oder 2,
**dadurch gekennzeichnet, dass** die elektronischen Baueinheiten der Stellaggregate (12,13) eine Fehlererkennung basierend auf lokalen aktorspezifischen Signalen, wie Aktorstrom oder Aktorposition durchführen und bei einem erkannten Fehler eine entsprechende Meldung an das System der Fahrzeuglenkung ausgeben und das fehlerhafte Stellaggregat (12 bzw. 13) abschalten.

4. Fahrzeuglenkung nach einem der Ansprüche 1 bis 3,
**dadurch gekennzeichnet, dass** die Fahrzeuglenkung zwei Sollwertgeber (2,3) für den einzustellenden Lenkwinkel (205) und zwei den Lenkwinkel (205) der Fahrzeugräder (16,17) registrierende Istwertgeber (19,20) aufweist.

5. Fahrzeuglenkung nach einem der Ansprüche 1 bis 4,
**dadurch gekennzeichnet, dass** der/die Sollwertgeber (2,3) für den einzustellenden Lenkwinkel (205) und der/die den Lenkwinkel (205) der Fahrzeugräder (16,17) registrierenden Istwertgeber (19,20) redundant ausgeführt sind.

6. Fahrzeuglenkung nach einem der Ansprüche 1 bis 5,
**dadurch gekennzeichnet, dass** als Datenübertragungseinheit ein zumindest zwischen den Stellaggregaten (12,13) und der Zentralsteuereinheit (4) doppelt ausgeführter Datenbus (36) vorgesehen ist.

7. Fahrzeuglenkung nach einem der Ansprüche 1 bis 6,
**dadurch gekennzeichnet, dass** als Datenübertragungseinheit zwischen den Stellaggregaten (12,13) und der Zentralsteuereinheit (4) jeweils ein Datenbus (34,35) vorgesehen ist.

8. Fahrzeuglenkung nach einem der Ansprüche 1 bis 7,
**dadurch gekennzeichnet, dass** die Zentralsteuereinheit (4) mit einem Fahrzeugbussystem, insbesondere CAN (36), verbunden ist, zum Empfang von Informationen über den insbesondere aktuellen Fahrzeugzustand.

9. Fahrzeuglenkung nach einem der Ansprüche 1 bis 8,
**dadurch gekennzeichnet, dass** die Lenkbetätigungseinrichtung (1) antriebsmäßig mit einem mechanischen oder mechanisch-hydraulischen, ersten Betätigungskraftsimulator (7) verbunden ist, zur Simulierung eines bestimmten, vorgegebenen Betätigungswiderstands und dass die Lenkbetätigungseinrichtung mit einem elektrisch betätigbaren, vorzugsweise parameterabhängigen, zweiten Betätigungskraftsimulator (8), wirkungsmäßig verbunden ist, der nach Maßgabe zumindest des Istwerts und/oder gegebenenfalls weiterer Signale, insbesondere dynamische Fahrzeugzustands-Signale, wie Fahrzeuggeschwindigkeit, Fahrzeug-Gierwinkel oder Fahrbahnzustands-Signale, den zweiten Betätigungskraftsimulator (8) steuert.

10. Fahrzeuglenkung nach einem der Ansprüche 1 bis 9,
**dadurch gekennzeichnet, dass** die Zentralsteuereinheit (4) mit einem elektronischen Fahrzeugbremssystem, insbesondere einem elektromechanischen Bremssystem (EMB), verbunden ist.

11. Fahrzeuglenkung nach Anspruch 10,
**dadurch gekennzeichnet, dass** die Zentralsteuereinheit (4) der Fahrzeuglenkung und eine Zentralsteuereinheit des elektronischen Fahrzeugbremssystem als einzelne Module in einem gemeinsamen Gehäuse angeordnet sind.

12. Fahrzeuglenkung nach Anspruch 11,
**dadurch gekennzeichnet, dass** für die Fahrzeuglenkung und das elektronische Fahrzeugbremssystem eine gemeinsame Zentralsteuereinheit (80) vorgesehen ist.

13. Fahrzeuglenkung nach einem der Ansprüche 1 bis 12,
**dadurch gekennzeichnet, dass** die jeweils zwei elektromechanischen Stellaggregate (12,13) zum Steuern jeweils eines rechts und links an einem Fahrzeugkörper befindlichen lenkbaren Rades (16,17) eines Radpaares einer lenkbarer Fahrzeugachse (18) in Verbindung mit mindestens einer Lenkstange (203) als ein Achslenkmodul (201) ausgebildet sind.

14. Achslenkmodul für eine Fahrzeuglenkung nach einem der vorherigen Ansprüche,
mit zwei elektromechanischen Stellaggregaten (12,13), die jeweils einen elektrischen Elektromotor (44,45) aufweisen und die jeweils einem rechts und links an einem Fahrzeugkörper befindlichen lenkbaren Rad (16,17) eines Radpaares einer lenkbarer Fahrzeugachse (18) zugeordnet sind und miteinander über eine Verbindungseinrichtung (52) verbindbar sind, so dass die beiden lenkbaren Räder (16,17) über ein einziges Stellaggregat (12,13) verschwenkbar sind, wobei jedem Stellaggregat (12,13) zumindest zwei Elektronikeinheiten (46-49) zugeordnet sind und im Fall eines Fehlers eines der beiden Elektronikeinheiten (46-49) die jeweils andere, noch funktionstüchtige Elektronikeinheit die Steuerung des Stellaggregats (12,13) übernimmt.

15. Achslenkmodul nach Anspruch 14,
**dadurch gekennzeichnet, dass** die Fahrzeuglenkung zumindest eine als Schubstange ausgebildete Lenkstange (203) aufweist, die in ihrer Verlängerung verbindbar ist mit Spurstangen für die beiden lenkbaren Räder (16,17) und bei der koaxial Lenkstangenachse die zwei Elektromotoren (44,45) vorgesehen sind, die jeweils einen Rotor aufweisen, der über eine Übertragungseinrichtung mit einem Rotations-Translationswandler (150,151) verbunden ist, zur Einkopplung eines Motormoments auf die mindestens eine Lenkstange (203), um bei Betätigung zumindest eines Elektromotors (44,45) über ein Verschieben der mindestens einen Lenkstange die Lenkfunktion des Achslenkmoduls (201) sicherzustellen.

16. Achslenkmodul nach Anspruch 14 oder 15,
**dadurch gekennzeichnet, dass** die Übertragungseinrichtung Mittel zur direkten Kopplung mit dem Rotations-Translationswandler (150,151) aufweisen.

17. Achslenkmodul nach einem der Ansprüche 14 bis 16,
**dadurch gekennzeichnet, dass** der Rotations-Translationswandler (150,151) ein Gewindetrieb, vorzugsweise ein Kugelgewindetrieb (207), ist.

18. Achslenkmodul nach einem der Ansprüche 14 bis 17,
**dadurch gekennzeichnet, dass** der Rotations-Translationswandler (150,151) antriebsmäßig verbunden ist mit mindestens einer zumindest in einem Bereich oder Teilbereich des Achslenkmoduls gewindestangenartig ausgebildeten Lenkstange (Gewindestange), die von mindestens einer Gewindemutter (206) umgeben ist und mit dieser verbunden ist über dazwischen angeordnete Wälz- oder Rollkörper mit einer zum Gewinde der mindestens einen Gewindestange passenden Profilierung.

19. Achslenkmodul nach einem der Ansprüche 14 bis 18,
**dadurch gekennzeichnet, dass** die Übertragungseinrichtungen Getriebe oder Kupplungen (235,236), vorzugsweise Planetengetriebe, sind.

20. Achslenkmodul nach einem der Ansprüche 14 bis 19,
**dadurch gekennzeichnet, dass** der Elektromotor (44,45) einen Stator (225,226) mit einer Wicklung koaxial zur Lenkstange umfasst und einen um diesen drehgelagerten Rotor (210,211) mit Permanentmagneten, vorzugsweise ei Seltenerdmagnete, insbesondere Kobalt-Samarium oder Neodym-Magnete, aufweist.

21. Achslenkmodul nach einem der Ansprüche 14 bis 20,
**dadurch gekennzeichnet, dass** der Rotor (210,211) des Elektromotors (40,45) über die Übertragungseinrichtung mit der Gewindemutter (206) des Gewindetriebs (207) spielfrei und formschlüssig rotatorisch gekoppelt ist.

22. Achslenkmodul nach einem der Ansprüche 14 bis 21,
**dadurch gekennzeichnet, dass** der Rotor (210,211)des Elektromotors (49-45) zumindest in einem Teilbereich als ein Teil der Übertragungseinrichtung, vorzugsweise als ein Sonnenrad (227,228) eines Planetenradgetriebes ausgebildet ist.

23. Achslenkmodul nach einem der Ansprüche 14 bis 22,
**dadurch gekennzeichnet, dass** jedem Stellaggregat (12,13) zumindest zwei Elektronikeinheiten (46-49) zugeordnet sind und im Fall eines Fehlers eines der beiden Elektronikeinheiten (46-49) die jeweils andere, noch funktionstüchtige Elektronikeinheit die Steuerung des Stellaggregats (12,13) übernimmt.

24. Achslenkmodul nach einem der Ansprüche 14 bis 23,
**dadurch gekennzeichnet, dass** im Fall eines Fehlers eines Stellaggregats bzw. eines Elektromotors (40,45), durch das noch funktionstüchtige Stellaggregat (12,13) bzw. den Elektromotor (44,45) die Schwenkbewegung der Räder (16,17) durchgeführt wird, wobei die Baueinheit des fehlerhaften Stellaggregats rein mechanisch durch eine mechanische Kopplung über die Verbindungseinrichtung, insbesondere über die mindestens eine Gewindemutter (206) und den mindestens einen Gewindetrieb (207) mitschleppt werden.

25. Achslenkmodul nach einem der Ansprüche 14 bis 24,
**dadurch gekennzeichnet, dass** zur Aufnahme der entstehenden Stellkräfte auf die mindestens eine Lenkstange mindestens ein Lager, vorzugsweise ein Axial-Schrägkugellager (215), vorgesehen ist, das einen Innring (214) aufweist, zur Aufnahme der Gewindemutter (206) und zumindest eines Bauteils der Übertragungseinrichtung, vorzugsweise von Planetenträgern eines Planetenradgetriebes oder einer Kupplung, und das einen Außenring (218) aufweist, zur Einleitung der entstehenden Stellkräfte in ein Gehäuse (219) oder ein mit dem Gehäuse (219) kraftschlüssig verbundenem Bauteil des Achslenkmoduls.

26. Achslenkmodul nach Anspruch 25,
**dadurch gekennzeichnet, dass** dem Außenring (218) des Lagers mindestens ein Kraftsensor (220) zugeordnet ist, zur Erfassung der wirkenden Stellkräfte und zur Rückkopplung dieser ermittelten Stellkräfte an die Handbetätigungseinrichtung, vorzugsweise Handlenkrad (1) der Fahrzeuglenkung.

27. Achslenkmodul nach einem der Ansprüche 14 bis 26,
**dadurch gekennzeichnet, dass** der Stator (225,226) des Elektromotors (40,45) an einem Gehäuse (219) oder ein mit dem Gehäuse kraftschlüssig verbundenem Bauteil des Achslenkmoduls angeordnet ist und der Rotor (210,211) des Elektromotors (40,45) über ein Festlager 221,222) und ein Loslager (223,224) mit einem Gehäuse oder ein mit dem Gehäuse (219) kraftschlüssig verbundenem Bauteil des Achslenkmoduls drehbar gelagert sind.

28. Achslenkmodul nach einem der Ansprüche 16 bis 27,
**dadurch gekennzeichnet, dass** jedes Stellaggregate (12,13) als Übertragungseinrichtungen ein Planetenradgetriebe aufweist, dessen Sonnenrad (227,228) als Bauteile des Rotors (210,211) ausgeführt ist und sich gegen ein Hohlrad (231,232) abstützt, das Teil des Außenrings eines Lagers zur Aufnahme der Stellkräfte ist.

29. Achslenkmodul nach einem der Ansprüche 14 bis 18,
**dadurch gekennzeichnet, dass** den zwei Stellaggregaten (12,13) eine gemeinsame als Schubstange (203) ausgebildete Lenkstange, vorzugsweise eine gemeinsame Gewindestange, und ein gemeinsamer Rotations-Translationswandler, insbesondere einer gemeinsamen Gewindemutter (206) und gemeinsamen dazwischen angeordneten Wälz- oder Rollkörpern, zugeordnet ist, um bei Betätigung zumindest eines Stellaggregats (12,13) über ein Verschieben der Lenkstange (203) die Lenkfunktion des Achslenkmoduls sicherzustellen.

30. Achslenkmodul nach einem der Ansprüche 14 bis 29,
**dadurch gekennzeichnet, dass** jedem der beiden Stellaggregate (12,13) jeweils eine als Schubstange ausgebildete Lenkstange (237,238), vorzugsweise jeweils eine Gewindestange, und jeweils ein Rotations-Translationswandler, insbesondere jeweils eine Gewindemutter (206) und jeweils dazwischen angeordnete Wälz- oder Rollkörpern, zugeordnet ist und dass beiden Stellaggregaten (12,13) eine Verbindungseinrichtung zugeordnet ist, um die beiden Stellaggregate zu verbinden und bei Betätigung eines Stellaggregats (12,13) über ein Verschieben der zwei verbundenen Lenkstangen (237,238) die Lenkfunktion des Achslenkmoduls sicherzustellen.

31. Achslenkmodul nach Anspruch 30,
**dadurch gekennzeichnet, dass** die Verbindungseinrichtung eine elektromechanische Kupplung (235,236) aufweist, die Kupplungsscheiben aufweist, die mit Innenringen (248,249) von zwei Lagern, vorzugsweise Axial-Schrägkugellagern (250, 251), kraftschlüssig verbunden sind, die zur Aufnahme der auf die zwei Lenkstangen (237,238) entstehenden Stellkräfte dienen und dass im unbestromten Zustand die beiden Kupplungsscheiben (252,253) durch ein elastisches Mittel, vorzugsweise eine Druckfeder (262), gegeneinander gepresst werden und eine kraftschlüssige Verbindung zwischen den zwei Rotations-Translationswandlern der Stellaggregate (12,13) herstellen.

32. Achslenkmodul nach Anspruch 30 oder 31,
**dadurch gekennzeichnet, dass** ein bestimmter maximaler Verstellbereich der zwei Lenkstangen (237,238) gegeneinander vorgegeben wird mittels mechanischer Anschläge, die nur einen bestimmten Lenkstangen-Differenzweg der zwei Lenkstangen (237,238) relativ zueinander zulassen.

33. Achslenkmodul nach Anspruch 32,
**dadurch gekennzeichnet, dass** zumindest ein Teilbereich der einen von den beiden Lenkstangen (237,238) als eine Hohlwelle ausgebildet ist, die zwei Anschläge (275,276) aufweist und dessen Hohlraum von einer mit der anderen Lenkstange verbundenen Koppelstange (246) durchdrungen wird, die ein hohlwellenseitiges Endstück aufweist, das zwei innere Anschläge (268,269) und zwei äußere Anschläge (270,271) aufweist, die im Zusammenwirken mit zwei gegen die Anschläge abstützbaren Mitnehmerscheiben (266,267) und einer an den Mitnehmerscheiben (266,267) sich abstützenden Druckfeder (262) nur einen bestimmten Lenkstangen-Differenzweg der zwei Lenkstangen relativ zueinander zulässt.

34. Achslenkmodul nach Anspruch 33,
**dadurch gekennzeichnet, dass** bei geschlossener elektromechanischer Kupplung (282) die Koppelstange (246) eine Ausgangsstellung definiert, bei der die Druckfeder (247) eine maximale Länge aufweist und sich durch die beiden Mitnehmerscheiben (266,267) auf die zwei äußeren Anschläge 270,271) der Koppelstange und die beiden Anschläge (275,276) der Hohlwelle abstützt und dass bei geöffneter elektromechanischer Kupplung (282) eine erste und eine zweite Endstellung definiert wird, welche den maximalen Lenkstangen-Differenzweg festlegen, wobei bei der ersten Endstellung die Druckfeder (247) eine minimale Länge aufweist und sich durch die beiden Mitnehmerscheiben (266,267) einerseits auf einen ersten Anschlag der Hohlwelle und anderseits auf einen zweiten äußeren Anschlag der Koppelstange (246) abstützt und wobei bei der zweiten Endstellung die Druckfeder (247) eine minimale Länge aufweist und sich durch die beiden Mitnehmerscheiben (266,267) einerseits auf einen zweiten Anschlag der Hohlwelle und anderseits auf einen ersten äußeren Anschlag der Koppelstange abstützt.

## Claims

1. Vehicle steering system including
a steering operating device operable by the driver, in particular a hand steering wheel (1), with at least one actuating force simulator (7), with each one electromechanical actuator (12, 13) for controlling each steerable wheel (16, 17) of a pair of wheels on a steerable vehicle axle (18) at the right and left side of a vehicle body, with means which, in the event of failure or a malfunction of one of the two actuators (12, 13) associated with a steerable vehicle axle (18), ensure the control of the vehicle wheels (16, 17) of this vehicle axle (18) by the respectively other, still functioning actuator,
**characterized in that** the vehicle steering system is equipped with at least one set-value transducer (2, 3) for a steering angle (205) being adjusted that is operable by the steering operating device (1), with at least one actual-value transducer (19, 20) recording the steering angle (205) of the vehicle wheels (16, 17), with a central control unit (4) which controls the electromechanical actuators (12, 13) depending on a comparison of a signal of the actual-value transducer (19, 20) (actual value) with a signal of the set-value transducer (2, 3) (set value), and with a data transmission unit which establishes a data communication (14, 15, 21, 22) between the central control unit (4) and the electromechanical actuators (12, 13), wherein the central control unit (4) has a 'fail-silent' design and includes a redundant processor unit (40, 41), and wherein the actuators (12, 13) are designed to be 'fail-silent and include at least one electromechanical actuator (44, 45) each and one redundant electronic modular unit each (46-49).

2. Vehicle steering system as claimed in claim 1,
**characterized in that** each electromechanical actuator (12, 13) is respectively fed by an independent energy supply source (60).

3. Vehicle steering system as claimed in claim 1 or 2,
**characterized in that** the electronic modular units of the actuators (12, 13) perform fault detection based on local, actor-related signals such as actor current or actor position and, when a fault is detected, will emit a corresponding report to the vehicle steering system and disconnect the faulty actuator (12 or 13, respectively).

4. Vehicle steering system as claimed in any one of claims 1 to 3,
**characterized in that** the vehicle steering system includes two set-value transducers (2, 3) for the steering angle (205) being adjusted and two actual-value transducers (19, 20) that record the steering angle (205) of the vehicle wheels (16, 17).

5. Vehicle steering system as claimed in any one of claims 1 to 4,
**characterized in that** the set-value transducer(s) (2, 3) for the steering angle (205) being adjusted and the actual-value transducer(s) (19, 20) recording the steering angle (205) of the vehicle wheels (16, 17) have a redundant design.

6. Vehicle steering system as claimed in any one of claims 1 to 5,
**characterized in that** a data bus (36) that is of double design at least between the actuators (12, 13) and the central control unit (4) is provided as a data transmission unit.

7. Vehicle steering system as claimed in any one of claims 1 to 6,
**characterized in that** each one data bus (34, 35) is provided as a data transmission unit between the actuators (12, 13) and the central control unit (4).

8. Vehicle steering system as claimed in any one of claims 1 to 7,
**characterized in that** the central control unit (4) is connected to a vehicle bus system, in particular CAN (36), to receive data about the current vehicle condition in particular.

9. Vehicle steering system as claimed in any one of claims 1 to 8,
**characterized in that** the steering operating device (1) is connected to a mechanical or mechanic-hydraulic first actuating force simulator (7) in terms of driving, for the purpose of simulating a certain predefined operating resistance, and that the steering operating device is connected in terms of effect to an electrically operable, preferably parameter-responsive second actuating force simulator (8) which controls the second actuating force simulator (8) in accordance with at least the actual value and/or, possibly, further signals, in particular dynamic vehicle condition signals, such as vehicle speed, vehicle yaw angle, or road condition signals.

10. Vehicle steering system as claimed in any one of claims 1 to 9, **characterized in that** the central control unit (4) is connected to an electronic vehicle brake system, especially an electromechanical brake system (EMB).

11. Vehicle steering system as claimed in claim 10,
**characterized in that** the central control unit (4) of the vehicle steering system and a central control unit of the electronic vehicle brake system are arranged as individual modules in one joint housing.

12. Vehicle steering system as claimed in claim 11,
**characterized in that** a joint central control unit (80) is provided for the vehicle steering system and the electronic vehicle brake system.

13. Vehicle steering system as claimed in any one of claims 1 to 12,
**characterized in that** the respectively two electromechanical actuators (12, 13) for controlling each one steerable wheel (16, 17) of a pair of wheels on a steerable vehicle axle (18) at the right and left side of a vehicle body are configured as an axle guide module (201) in connection with at least one steering rod (203).

14. Axle guide module for a vehicle steering system as claimed in any one of the preceding claims, including two electromechanical actuators (12, 13) having one electric motor (44, 45) each and being associated with each one
steerable wheel (16, 17) of a pair of wheels of a steerable vehicle axle (18) at the right and left side of a vehicle body and being connectable with each other by way of a coupling device (52) so that the two steerable wheels (16, 17) are adapted to be directed by way of one single actuator (12, 13), wherein at least two electronic units (46-49) are associated with each actuator (12, 13), and in the event of a fault of one of the two electronic units (46, 49), the respectively other still operative electronic unit assumes the control of the actuator (12, 13).

15. Axle guide module as claimed in claim 14,
**characterized in that** the vehicle steering system includes at least one steering rod (203) designed as a thrust rod which, in its extension, is connectable to tie rods for the two steerable wheels (16, 17) and wherein the two electric motors (44, 45) are provided coaxially relative to the steering rod axis, each motor including a rotor which is connected to a rotation/translation converter (150, 151) by way of a transmission device for introducing an engine torque to the at least one steering rod (203) in order to ensure the steering function of the axle guide module (201) by way of displacing the at least one steering rod upon actuation of at least one electric motor (44, 45).

16. Axle guide module as claimed in claim 14 or 15,
**characterized in that** the transmission device includes means for the direct coupling to the rotation/translation converter (150, 151).

17. Axle guide module as claimed in any one of claims 14 to 16,
**characterized in that** the rotation/translation converter (150, 151) is a threaded gear, preferably a screw thread (207).

18. Axle guide module as claimed in any one of claims 14 to 17,
**characterized in that** the rotation/translation converter (150, 151) is connected in terms of driving to at least one steering rod (threaded rod) which is configured as a thread rod at least in an area or partial area of the axle guide module, said steering rod being encompassed by at least one threaded nut (206) and connected thereto by way of interposed rollers having a profile that mates with the thread of the at least one threaded rod.

19. Axle guide module as claimed in any one of claims 14 to 18,
**characterized in that** the transmission devices are drive units or clutches (235, 236), preferably planetary gears.

20. Axle guide module as claimed in any one of claims 14 to 19,
**characterized in that** the electric motor (44, 45) comprises a stator (225, 226) with a winding coaxially relative to the steering rod and includes a rotor (210, 211) pivoted about the stator and having permanent magnets, preferably rare earth magnets, especially cobalt-samarium or neodymium magnets.

21. Axle guide module as claimed in any one of claims 14 to 20,
**characterized in that** the rotor (210, 211) of the electric motor (40-45) is form-lockingly rotatorily coupled to the threaded nut (206) of the threaded gear (207) in a clearance-free manner by way of the transmission device.

22. Axle guide module as claimed in any one of claims 14 to 21,
**characterized in that** the rotor (210, 211) of the electric motor (40-45) is configured as a part of the transmission device, preferably as a sun wheel (227, 228) of a planetary gear, at least in a partial area.

23. Axle guide module as claimed in any one of claims 14 to 22,
**characterized in that** at least two electronic units (46-49) are associated with each actuator (12, 13), and in the event of a fault of one of the two electronic units (46, 49), the respectively other still operative electronic unit assumes the control of the actuator (12, 13).

24. Axle guide module as claimed in any one of claims 14 to 23,
**characterized in that** in the event of a fault of an actuator or an electric motor (40, 45), respectively, the turning movement of the wheels (16, 17) is performed by the still operative actuator (12, 13) or the electric motor (44, 45), respectively, and the modular unit of the defective actuator is entrained purely mechanically due to a mechanical coupling by way of the coupling device, in particular by means of the at least one threaded nut (206) and the at least one threaded gear (207).

25. Axle guide module as claimed in any one of claims 14 to 24,
**characterized in that** at least one bearing, preferably an axial angular ball bearing (215), is provided to accommodate the setting forces acting on the at least one steering rod, the said bearing having an inner ring (214) as a seat for the threaded nut (206) and for at least one component of the transmission device, preferably planet carriers of a planetary gear or a clutch, as well as an outer ring (218) to introduce the setting forces that develop into a housing (219) or a component of the axle guide module that is operatively connected to the housing (219).

26. Axle guide module as claimed in claim 25,
**characterized in that** at least one force sensor (220) is associated with the outer ring (218) of the bearing in order to sense the active setting forces and to provide a feedback about these determined setting forces to the manual actuating device, preferably the hand steering wheel (1) of the vehicle steering system.

27. Axle guide module as claimed in any one of claims 16 to 26,
**characterized in that** the stator (225, 226) of the electric motor (40, 45) is arranged at a housing (219) or a component of the axle guide module that is operatively connected to the housing, and the rotor (210, 211) of the electric motor (40, 45) is pivoted by way of an immovable bearing (221, 222) and a movable bearing (223, 224) at a housing or a component of the axle guide module that is operatively connected to the housing (219).

28. Axle guide module as claimed in any one of claims 16 to 27,
**characterized in that** each actuator (12, 13) includes as transmission devices a planetary gear having a sun wheel (227, 228) that is designed as a component part of the rotor (210, 211) and is supported on a ring gear (231, 232) that is a part of the outer ring of a bearing for accommodating the setting forces.

29. Axle guide module as claimed in any one of claims 14 to 18,
**characterized in that** the two actuators (12, 13) are provided with one joint steering rod configured as a thrust rod (203), preferably one joint threaded rod, and one joint rotation/translation converter, in particular one joint threaded nut (206) and joint roll bodies arranged therebetween, in order to ensure the steering function of the axle guide module by way of displacing the steering rod (203) upon actuation of at least one actuator (12, 13).

30. Axle guide module as claimed in any one of claims 14 to 29, **characterized in that** associated with each of the two actuators (12, 13) is respectively one steering rod (237, 238) configured as a thrust rod, preferably each one threaded rod, and each one rotation-translation converter, especially each one threaded nut (206) and roll bodies respectively arranged therebetween, and that associated with both actuators (12, 13) is a coupling device to connect the two actuators and to ensure the steering function of the axle guide module by displacing the two connected steering rods (237, 238) upon actuation of an actuator (12, 13).

31. Axle guide module as claimed in claim 30,
**characterized in that** the coupling device includes an electromechanical clutch (235, 236) having clutch discs which are operatively connected to inner rings (248, 249) of two bearings, preferably axial angular ball bearings (250, 251), which are used to accommodate the setting forces that act on the two steering rods (237, 238), and that in the de-energized condition the two clutch discs (252, 253) are pressed against each other by an elastic means, preferably a compression spring (262), and constitute an operative connection between the two rotation/translation converters of the actuators (12, 13).

32. Axle guide module as claimed in claim 30 or 31,
**characterized in that** a defined maximum setting range of the two steering rods (237, 238) with respect to each other is predetermined by means of mechanic stops that allow only a defined difference in travel of the two steering rods (237, 238) in relation to each other.

33. Axle guide module as claimed in claim 32,
**characterized in that** at least one partial area of the one of the two steering rods (237, 238) is configured as a hollow shaft having two stops (275, 276) and a hollow space which is penetrated by a coupling rod (246) connected to the other steering rod, said coupling rod including an end piece close to the hollow shaft that has two inner stops (268, 269) and two outer stops (270, 271) that allow only a defined difference in travel of the two steering rods in relation to each other in interaction with two entrainer discs (266, 267) adapted to bear against the stops and a compression spring (262) that is supported on the entrainer discs (266, 267).

34. Axle guide module as claimed in claim 33,
**characterized in that** when the electromechanical clutch (282) is closed, the coupling rod (246) defines an initial position in which the compression spring (247) has a maximum length and is supported by the two entrainer discs (266, 267) on the two outer stops (270, 271) of the coupling rod and the two stops (275, 276) of the hollow shaft, and that when the electromechanical clutch (282) is open, a first and a second end position is defined, thereby fixing the maximum difference in travel of the steering rods, wherein in the first end position, the compression spring (247) has a minimum length and is supported by way of the two entrainer discs (266, 267) on a first stop of the hollow shaft, on the one hand, and on a second outer stop of the coupling rod (246), on the other hand, and wherein in the second end position, the compression spring (247) has a minimum length and by way of the two entrainer discs (266, 267) is supported on a second stop of the hollow shaft, on the one hand, and on a first outer stop of the coupling rod, on the other hand.

## Revendications

1. Direction de véhicule, comportant un dispositif d'actionnement de direction, en particulier un volant de direction (1), à actionner par le conducteur, comportant au moins un simulateur de force d'actionnement (7), comportant des groupes de réglage électromécanique (12, 13) pour commander chacune des roues directrices (16, 17) se trouvant à droite et à gauche sur un corps de véhicule, d'une paire de roues d'un essieu de véhicule directeur (18),comportant des moyens qui en cas de défaillance ou de dérangement de l'un des deux groupes de réglage (12, 13) associés à un essieu de véhicule directeur (18), assurent par l'autre groupe de réglage encore en fonction, la commande des deux roues de véhicule (16, 17) de cet essieu de véhicule (18), **caractérisée en ce que** la direction de véhicule comporte au moins un transmetteur de valeur de consigne (2, 3), pouvant être actionné par le dispositif d'actionnement de direction (1), pour un angle de braquage (205) à régler, au moins un transmetteur de valeur réelle (19, 20) enregistrant l'angle de braquage (205) des roues (16, 17) du véhicule, une unité centrale de commande (4) qui commande les groupes électromécaniques de réglage (12, 13) en fonction d'une comparaison d'un signal du transmetteur de valeur réelle (19, 20) (valeur réelle) et d'un signal du transmetteur de valeur de consigne (2, 3) (valeur de consigne), ainsi qu'une unité de transmission des données qui réalise une liaison de données (14, 15, 21, 22) entre l'unité centrale de commande (4) et les groupes de réglage électromécaniques (12, 13), l'unité centrale de commande (4) étant réalisée "fail-silent" et comportant une unité de calcul (40, 41) redondante et les groupes de réglage (12, 13) étant réalisés "fail-silent" et comportant au moins chacun un actionneur électromécanique (44, 45) et chacun une unité de construction électronique (46-49) redondante.

2. Direction de véhicule selon la revendication 1, **caractérisée en ce que** chaque groupe de réglage électromécanique (12, 13) est alimenté par une source d'alimentation en énergie (60) indépendante respective.

3. Direction de véhicule selon la revendication 1 ou 2, **caractérisée en ce que** les unités de construction électroniques des groupes de réglage (12, 13) procèdent à une reconnaissance de défaut sur la base de signaux locaux spécifiques de l'actionneur, tels que le courant ou la position de l'actionneur, et en cas de défaut reconnu délivrent une signalisation correspondante au système de la direction de véhicule et désactivent le groupe de réglage (12 ou 13) défectueux.

4. Direction de véhicule selon l'une des revendications 1 à 3, **caractérisée en ce que** la direction de véhicule comporte deux transmetteurs de valeur de consigne (2, 3) pour l'angle de braquage (205) à régler et deux transmetteurs de valeur réelle (19, 20) enregistrant l'angle de braquage (205) des roues (16, 17) du véhicule.

5. Direction de véhicule selon l'une des revendications 1 à 4, **caractérisée en ce que** le/les transmetteur(s) de valeur de consigne (2, 3) pour l'angle de braquage (205) à régler et le/les transmetteur(s) de valeur réelle (19, 20) enregistrant l'angle de braquage (205) des roues (16, 17) du véhicule sont réalisés redondants.

6. Direction de véhicule selon l'une des revendications 1 à 5, **caractérisée en ce qu'**il est prévu comme unité de transmission des données un bus de données (36) réalisé en double au moins entre les groupes de réglage (12, 13) et l'unité centrale de commande (4).

7. Direction de véhicule selon l'une des revendications 1 à 6, **caractérisée en ce qu'**il est prévu comme unité de transmission des données un bus de données entre chacun des groupes de réglage (12, 13) et l'unité centrale de commande (4).

8. Direction de véhicule selon l'une des revendications 1 à 9, **caractérisée en ce que** l'unité centrale de commande (4) est reliée à un système de bus de véhicule, en particulier CAN (36), pour la réception d'informations relatives à l'état du véhicule en particulier actuel.

9. Direction de véhicule selon l'une des revendications 1 à 8, **caractérisée en ce que** le dispositif d'actionnement de direction (1) est relié en entraînement à un premier simulateur de force d'actionnement (7) mécanique ou mécanique et hydraulique, pour la simulation d'un état d'actionnement prédéfini déterminé et **en ce que** le dispositif d'actionnement de direction est relié de manière fonctionnelle à un deuxième simulateur de force d'actionnement (8) pouvant être actionné électriquement, dépendant de préférence de paramètres, laquelle commande le deuxième simulateur de force d'actionnement (8) en fonction d'au moins la valeur réelle et/ou éventuellement d'autres signaux, en particulier des signaux dynamiques de l'état du véhicule, tels que la vitesse du véhicule, l'angle de lacet du véhicule ou des signaux relatifs à l'état de la chaussée.

10. Direction de véhicule selon l'une des revendications 1 à 9, **caractérisée en ce que** l'unité centrale de commande (4) est reliée à un système électronique de freinage du véhicule, en particulier un système de freinage électromécanique (EMB).

11. Direction de véhicule selon la revendication 10, **caractérisée en ce que** l'unité centrale de commande (4) de la direction de véhicule et une unité centrale de commande du système électronique de freinage du véhicule sont disposées en tant que modules individuels dans un boîtier commun.

12. Direction de véhicule selon la revendication 11, **caractérisée en ce que** pour la direction de véhicule et le système électronique de freinage du véhicule il est prévu une unité centrale de commande (80) commune .

13. Direction de véhicule selon l'une des revendications 1 à 12, **caractérisée en ce que** les deux groupes de réglage électromécaniques (12, 13) pour la commande respective des roues directrices (16, 17) se trouvant à gauche et à droite sur un corps de véhicule, d'une paire de roues d'un essieu de véhicule directeur (18), en combinaison avec au moins une barre de direction (203), sont réalisés sous la forme d'un module de direction d'essieu (201).

14. Module de direction d'essieu pour une direction de véhicule selon l'une des revendications précédentes, comportant deux groupes de réglage électromécaniques (12, 13) qui comportent chacun un moteur électrique (44, 45) et qui sont associés chacun à une roue directrice (16, 17) se trouvant à droite et à gauche sur un corps de véhicule, d'une paire de roues d'un essieu de véhicule directeur (18), et peuvent être reliés entre eux par un dispositif de liaison (52), ce qui fait que les deux roues directrices (16, 17) peuvent pivoter par l'intermédiaire d'un seul groupe de réglage (12, 13), à chaque groupe de réglage (12, 13) étant associées au moins deux unités électroniques (46-49) et, dans le cas d'un défaut de l'une des deux unités électroniques (46-49), l'autre unité électronique encore en fonction assure la commande du groupe de réglage (12, 13).

15. Module de direction d'essieu selon la revendication 14, **caractérisée en ce que** la direction de véhicule comporte au moins une barre de direction (203) réalisée sous la forme d'une barre de poussée qui dans son prolongement peut être reliée à des barres d'accouplement pour les deux roues directrices (16, 17) et sur laquelle sont prévus coaxialement à l'axe de la barre de direction les deux moteurs électriques (44, 45) qui comportent chacun un rotor lequel est relié par l'intermédiaire d'un dispositif de transmission à un convertisseur rotation-translation (150, 151) pour introduire un couple moteur dans au moins une barre de direction (203), afin d'assurer, lors de l'actionnement d'au moins un moteur électrique (44, 45), par une translation de la au moins une barre de direction, la fonction de direction du module de direction d'essieu (201).

16. Module de direction d'essieu selon la revendication 14 ou 15, **caractérisé en ce que** le dispositif de transmission comporte des moyens pour l'accouplement direct avec le convertisseur rotation-translation (150, 151).

17. Module de direction d'essieu selon l'une des revendications 14 à 16, **caractérisé en ce que** le convertisseur rotation-translation (150, 151) est un mécanisme à vis, de préférence un mécanisme à vis et billes (207).

18. Module de direction d'essieu selon l'une des revendications 14 à 17, **caractérisé en ce que** le convertisseur rotation-translation (150, 151) est relié en entraînement à au moins une barre de direction réalisée à la manière d'une barre filetée dans une zone ou une zone partielle du module de direction d'essieu (barre filetée) qui est entourée par au moins un écrou pour vis (206) et est reliée à celui-ci par l'intermédiaire de corps de roulement disposés entre eux avec eux un profilage ajusté au filetage de la au moins une barre filetée.

19. Module de direction d'essieu selon l'une des revendications 14 à 18, **caractérisé en ce que** les dispositifs de transmission sont des engrenages ou des accouplements (235, 236), de préférence des engrenages planétaires.

20. Module de direction d'essieu selon l'une des revendications 14 à 19, **caractérisé en ce que** le moteur électrique (44, 45) comprend un stator (225, 226) avec un enroulement coaxial à la barre de direction et un rotor (210, 211) monté tournant autour du stator, avec des aimants permanents, de préférence des aimants à terres rares, en particulier des aimants à cobalt et samarium ou aimants à néodyme.

21. Module de direction d'essieu selon l'une des revendications 14 à 20, **caractérisé en ce que** le rotor (210, 211) du moteur électrique (40, 45) est couplé en rotation, sans jeu et par complémentarité de formes, par l'intermédiaire du dispositif de transmission, à l'écrou pour vis (206) du mécanisme à vis (207).

22. Module de direction d'essieu selon l'une des revendications 14 à 21, **caractérisé en ce que** le rotor (210, 211) du moteur électrique (49-45) est réalisé, au moins dans une zone partielle, sous la forme d'une partie du dispositif de transmission, de préférence sous la forme d'une roue solaire (227, 228) d'un engrenage planétaire.

23. Module de direction d'essieu selon l'une des revendications 14 à 22, **caractérisé en ce qu'**à chaque groupe de réglage (12, 13) sont associées au moins deux unités électroniques (46-49) et, dans le cas d'un défaut de l'une des deux unités électroniques (46-49), l'autre unité électronique encore en fonction assure la commande du groupe de réglage (12, 13).

24. Module de direction d'essieu selon l'une des revendications 14 à 23, **caractérisé en ce que** dans le cas d'un défaut d'un groupe de réglage ou d'un moteur électrique (40, 45), le mouvement de pivotement des roues (16, 17) est assuré par le groupe de réglage (12, 13) ou le moteur électrique (44, 45) encore en fonction, l'unité de construction du groupe de réglage défectueux étant entraînée de manière purement mécanique par un couplage mécanique, par l'intermédiaire du dispositif de liaison, en particulier par l'intermédiaire du au moins un écrou pour vis (206) et le au moins un mécanisme à vis (207).

25. Module de direction d'essieu selon l'une des revendications 14 à 24, **caractérisé en ce que** pour absorber les forces de réglage se produisant sur la au moins une barre de direction, il est prévu au moins un palier, de préférence un palier de roulement axial à billes à contact oblique (215) qui comporte une bague intérieure (214) pour recevoir l'écrou pour vis (206) et au moins un composant du dispositif de transmission, de préférence de porte-satellites d'un engrenage planétaire ou d'un accouplement, et qui comporte une bague extérieure (218) pour l'introduction des forces de réglage se produisant dans un boîtier (219) ou un composant du module de direction d'essieu relié à force au boîtier (219).

26. Module de direction d'essieu selon la revendication 25, **caractérisé en ce qu'**à la bague extérieure (218) du palier est associé au moins un capteur de force (220), pour détecter les forces de réglage agissantes et pour la rétroaction de ces forces de réglage déterminées au dispositif d'actionnement manuel, de préférence au volant de direction (1) de la direction de véhicule.

27. Module de direction d'essieu selon l'une des revendications 14 à 26, **caractérisé en ce que** le stator (225, 226) du moteur électrique (40, 45) est disposé sur un boîtier (219) ou un composant du module de direction d'essieu relié à force au boîtier, et le rotor (210, 211) du moteur électrique (40, 45) est supporté tournant par un palier de butée (221, 222) et un palier libre (223, 224) avec un boîtier ou un composant du module de direction d'essieu relié à force au boîtier (219).

28. Module de direction d'essieu selon l'une des revendications 16 à 27, **caractérisé en ce que** chaque groupe de réglage (12, 13) comporte comme dispositif de transmission un engrenage planétaire dont la roue solaire (227, 228) est réalisée en tant que composant du rotor (210, 211) et prend appui contre une roue creuse (231, 232) qui fait partie de la bague extérieure d'un palier destiné à absorber les forces de réglage.

29. Module de direction d'essieu selon l'une des revendications 14 à 18, **caractérisé en ce qu'**aux deux groupes de réglage (12, 13) est associée une barre de direction commune, réalisée sous la forme d'une barre d'accouplement (203), de préférence une barre filetée commune, ainsi qu'un convertisseur commun rotation-translation, en particulier un écrou pour vis commun et des corps de roulement communs intercalés, afin d'assurer la fonction de direction du module de direction d'essieu lors de l'actionnement d'au moins un groupe de réglage (12, 13) par une translation de la barre de direction (203).

30. Module de direction d'essieu selon l'une des revendications 14 à 29, **caractérisé en ce qu'**à chacun des deux groupes de réglage (12, 13) est associée respectivement une barre de direction (237, 238) réalisée en tant que barre de poussée, de préférence respectivement une barre filetée, et respectivement un convertisseur rotation-translation, en particulier respectivement un écrou pour vis (206) et respectivement des corps de roulement disposés intercalés, et **en ce qu'**aux deux groupes de réglage (12, 13) est associé un dispositif de liaison afin de relier les deux groupes de réglage, et, en cas d'actionnement d'un groupe de réglage (12, 13), d'assurer la fonction de direction du module de direction d'essieu, par une translation des deux barres de direction (237, 238) reliées.

31. Module de direction d'essieu selon la revendication 30, **caractérisé en ce que** le dispositif de liaison comporte un embrayage électromécanique (235, 236) qui comporte des disques d'embrayage lesquels sont reliés à force à des bagues intérieures (248, 249) de deux paliers, de préférence des paliers axiaux de roulement à billes à contact oblique (250, 251), qui servent à absorber les forces de réglage se produisant sur les deux barres de direction (237, 238), et **en ce qu'**à l'état non parcouru par un courant les deux disques d'embrayage (252, 253) sont pressés l'un contre l'autre par un moyen élastique, de préférence un ressort de pression (262), et réalisent une liaison à force entre les deux convertisseurs rotation-translation des groupes de réglage (12, 13).

32. Module de direction d'essieu selon la revendication 30 ou 31, **caractérisé en ce qu'**une plage de réglage maximale déterminée des deux barres de direction (237, 238) l'une par rapport à l'autre est prédéfinie au moyen de butées mécaniques qui n'autorisent qu'une course différentielle déterminée des deux barres de direction (237, 238) l'un par rapport à l'autre.

33. Module de direction d'essieu selon la revendication 32, **caractérisé en ce qu'**au moins une zone partielle de l'une des deux barres de direction (237, 238) est réalisée sous la forme d'un arbre creux qui comporte deux butées (275, 276) et dont la cavité est traversée par une barre de couplage (246) reliée à l'autre barre de direction, laquelle barre de couplage comporte un embout côté arbre creux qui présente deux butées intérieures (268, 269) et deux butées extérieures (270, 271) qui, en coopération avec deux disques entraîneurs (266, 267) pouvant prendre appui contre les butées et un ressort de pression (262) prenant appui contre les disques entraîneurs (266, 267), n'autorisent qu'une course différentielle déterminée des deux barres de direction l'une par rapport à l'autre.

34. Module de direction d'essieu selon la revendication 33, **caractérisé en ce que** lorsque l'embrayage électromécanique (282) est fermé, la barre de couplage (246) définit une position initiale pour laquelle le ressort de pression (247) présente une longueur maximale et prend appui sur les deux butées extérieures (270, 271) de la barre de couplage et les deux butées (275, 276) de l'arbre creux, et **en ce que** lorsque l'embrayage électromécanique (282) est ouvert, il est défini une première position de fin de course et une deuxième position de fin de course qui définissent la course différentielle maximale des barres de direction, dans la première position de fin de course le ressort de pression (247) présentant une longueur minimale et prenant appui, par les deux disques entraîneurs (266, 267), d'une part, sur une première butée de l'arbre creux, et, d'autre part, sur une deuxième butée extérieure de la barre de couplage (246), et dans la deuxième position de fin de course, le ressort de pression (247) présentant une longueur minimale et prenant appui, par les deux disques entraîneurs (266, 267), d'une part, sur une première butée de l'arbre creux, et, d'autre part, sur une première butée extérieure de la barre de couplage.
